# EUROPEAN PATENT APPLICATION

(11) **EP 1 763 251 A1**
(43) Date of publication of application: **14.03.2007**
(21) Application number: 05765122.6
(22) Date of filing: 24.06.2005
(51) Int. Cl.: H04N 7/30

(54) **IMAGE ENCODING METHOD AND IMAGE DECODING METHOD**

(30) Priority: 25.06.2004 JP 2004188568
(71) Applicant: MATSUSHITA ELECTRIC INDUSTRIAL CO., LTD., Osaka 571-8501 (JP)
(72) Inventor: KONDO, Satoshi c/o Mat. Elec. Ind. Co., Ltd., Osaka-shi, Osaka 540-6319 (JP); SASAI, Hisao c/o Mat. Elec. Ind. Co., Ltd., Osaka-shi, Osaka 540-6319 (JP)
(74) Representative: Eisenführ, Günther
(86) International application number: PCT/JP2005/011642
(87) International publication number: WO 2006/001384

(57) **Abstract**

An image coding method and an image decoding method for improving the quality of a decoded image while significantly reducing the amount of bits are provided.

This image coding method includes: a coding step (S102) of coding an input image and generating a bit stream including the coded input image; a decoded image generation step (S104) of generating a decoded image by decoding the coded input image; and a parameter generation step (S106 and S108) of performing frequency-based processing on at least one of the input imagegenerating a parameter for making the decoded image more closely resemble the input image, based on the processing.

## Description

### Technical Field

The present invention relates to an image coding method and an image decoding method for use when compressing and coding a moving image signal.

### Background Art

A conventional image coding device (see, for example, Patent Reference 1) includes first and second coding units, and codes an image using a layered moving image coding scheme (scalable coding scheme). The first coding unit scales down an input image (a high-resolution image), converts it into a low-resolution image, and performs coding on the low-resolution image. The second coding unit performs coding on a difference image between the input image (the high-resolution image) and an image scaled up from a local decoded image corresponding to the low-resolution image generated by the first coding unit.

More specifically, in such a conventional method, high-resolution components of an input image are coded as a difference image between the input image and an image scaled up from a local decoded image of a low-resolution image. In other words, this difference image is considered as the high-resolution components.
Patent Reference 1: Japanese Laid-Open Patent Application No. 06-78292 Publication

### Disclosure of Invention

### Problems that Invention is to Solve

However, these high-resolution components are coded strictly as image data (a difference image), and therefore there is a problem that such data coding generates a large amount of code.

The present invention has been conceived in view of this problem, and it is an object thereof to provide an image coding method and an image decoding method for improving the quality of a decoded image, while significantly reducing the amount of bits.

### Means to Solve the Problems

In order to achieve the above object, the image coding method according to the present invention is an image coding method of coding an input image, and includes: a coding step of coding an input image and generating a bit stream including the coded input image; a decoded image generation step of generating a decoded image by decoding the coded input image; and a parameter generation step of generating a parameter for making the decoded image more closely resemble the input image, based on a frequency component of at least one of the input image and the decoded image. For example, in the parameter generation step, the parameter is generated by performing frequency transform on the decoded image and the input image and deriving a difference between frequency transform coefficients of the decoded image and the input image which are obtained by the frequency transform.

Accordingly, since a parameter is generated based on the frequency component of at least one of the input image and the decoded image, it is possible to reduce an amount of information of the parameter, compared with the conventional image data (differential image). In other words, it is possible for the image decoding device to improve the quality of the decoded image using the parameter, while significantly reducing the amount of bits including the bit stream and the parameter.

In the parameter generation step, the parameter may be generated per image area by deriving a difference between frequency transform coefficients of the decoded image and the input image on a per image area basis.

Accordingly, since the parameter suited for each image area is generated, it is possible to further improve the quality of the decoded image by making the decoded image more closely resemble the input image.

The image coding method may further include an identification information generation step of generating identification information for identifying processing used for generating the parameter in the parameter generation step.

Accordingly, if the image decoding device obtains the identification information, it can improve the quality of the decoded image by making the decoded image closely resemble the input image properly based on the processing indicated by the identification information.

The image coding method may further include a pre-processing step of performing predetermined pre-processing on the input image, and in the coding step, an input image on which the pre-processing has been performed is coded and a bit stream is generated, and in the parameter generation step, the parameter is generated based on a frequency component of at least one of: the decoded image; and the input image on which the pre-processing has been performed or the input image on which the pre-processing has not been performed. For example, in the pre-processing step, one of: image size reduction processing; low-pass filtering; and frame rate reduction processing is performed on the input image.

Accordingly, since the pre-processing is performed on the input image, the amount of bits can be reduced.

The image coding method may further include a pre-processing parameter generation step of generating a pre-processing parameter indicating details of the pre-processing performed in the pre-processing step.

Accordingly, if the image decoding device obtains the pre-processing parameter, it can generate the decoded image properly and to improve the quality of the decoded image based on the details of the pre-processing indicated by the pre-processing parameter.

Here, the image decoding method according to the present invention is an image decoding method of decoding a coded input image, and includes: a bit stream obtainment step of obtaining a bit stream; a decoding step of generating a decoded image by decoding the coded input image included in the bit stream; a parameter obtainment step of obtaining a parameter generated based on a frequency component of at least one of the coded input image and the decoded image; and an image quality improvement step of generating a high quality decoded image that more closely resembles an input image than the decoded image, by applying the parameter to the decoded image.

Accordingly, when the image coding device outputs a parameter, it is possible to generate a high quality decoded image by properly improving a decoded image using the parameter.

Note that it is possible to embody the present invention not only as such image coding method and image decoding method, but also as an image coding device and an image decoding device as well as an integrated circuit which perform the processing using these methods, a program for implementing these methods, and a storage medium for storing the program.

### Effects of the Invention

The image coding method and the image decoding method of the present invention have an advantageous effect of improving the quality of a decoded image, while significantly reducing the amount of bits, and therefore the practical value thereof is high.

### Brief Description of Drawings

FIG. 1 is a block diagram of an image coding device using an image coding method in the first embodiment of the present invention. (First embodiment)
FIG. 2 is a block diagram showing a structure example of a parameter extraction unit in the above image coding device. (First embodiment)
FIG. 3 is a block diagram showing a structure example of an extraction unit in the above image coding device. (First embodiment)
FIG. 4 is a schematic diagram for explaining a processing method in a coefficient correction unit in the above image coding device. (First embodiment)
FIG. 5 is a flowchart showing operation of the above image coding device. (First embodiment)
FIG. 6 is a block diagram showing a structure example of a parameter extraction unit in the first modification of the above embodiment. (First modification of the first embodiment)
FIG. 7 is a schematic diagram showing a case where the image coding device of the above first modification represents an input image and a local decoded image as multi-resolution representation using a discrete wavelet transform coefficient.
FIG. 8 is a block diagram showing a structure example of a parameter extraction unit in the second modification of the above embodiment. (Second modification of the first embodiment)
FIG. 9 is a block diagram showing a structure example of a Laplacian generation unit in the second modification of the above embodiment. (Second modification of the first embodiment)
FIG. 10 is a diagram showing an example of Laplacian images in the second modification of the above embodiment. (Second modification of the first embodiment)
FIG. 11 is a block diagram showing a structure example of a parameter extraction unit in the third modification of the above embodiment. (Third modification of the first embodiment)
FIG. 12 is a block diagram showing a structure of an optimal parameter extraction unit in the fourth modification of the above embodiment. (Fourth modification of the first embodiment)
FIG. 13 is a block diagram of an image coding device using an image coding method in the second embodiment of the present invention. (Second embodiment)
FIG. 14 is a block diagram showing a structure example of an additional parameter extraction unit in the above image coding device. (Second embodiment)
FIG. 15 is a block diagram showing a structure example of an additional parameter extraction unit in the modification of the above embodiment. (Modification of the second embodiment)
FIG. 16 is a block diagram of an image decoding device using an image decoding method in the third embodiment of the present invention. (Third embodiment)
FIG. 17 is a block diagram showing a structure example of an image quality improvement processing unit in the above image decoding device. (Third embodiment)
FIG. 18 is a flowchart showing operation of the above image decoding device. (Third embodiment)
FIG. 19 is a block diagram showing a structure example of an image quality improvement processing unit in the first modification of the above embodiment. (First modification of the third embodiment)
FIG. 20A is a schematic diagram showing a case where the image decoding device of the above first modification represents a decoded image and a high quality decoded image as multi-resolution representation using discrete wavelet transform coefficients. (First modification of the third embodiment)
FIG. 20B is another schematic diagram showing a case where the image decoding device of the above first modification represents a decoded image and a high quality decoded image as multi-resolution representation using discrete wavelet transform coefficients. (First modification of the third embodiment)
FIG. 21 is a block diagram showing a structure example of an image quality improvement processing unit in the second modification of the above embodiment. (Second modification of the third embodiment)
FIG. 22 is a diagram showing an example of Lapalacian images generated by a Laplacian generation unit in the second modification of the above embodiment. (Second modification of the third embodiment)
FIG. 23 is a block diagram showing a structure example of an image quality improvement processing unit in the third modification of the above embodiment. (Third modification of the third embodiment)
FIG. 24 is a block diagram showing a structure example of an optimal image quality improvement processing unit in the fourth modification of the above embodiment. (Fourth modification of the third embodiment)
FIG. 25 is a block diagram of an image decoding device using an image decoding method in the fourth embodiment of the present invention. (Fourth embodiment)
FIG. 26 is a block diagram of an image decoding device in the modification of the above embodiment. (Modification of the fourth embodiment)
FIG. 27A is a diagram for explaining about a recording medium for storing a program for causing a computer system to execute the image coding method and the image decoding method of the present invention. (Fifth embodiment)
FIG. 27B is another diagram for explaining about the recording medium for storing a program for causing a computer system to execute the image coding method and the image decoding method of the present invention. (Fifth embodiment)
FIG. 27C is still another diagram for explaining about the recording medium for storing a program for causing a computer system to execute the image coding method and the image decoding method of the present invention. (Fifth embodiment)
FIG. 28 is a block diagram showing an overall structure of a content supply system. (Sixth embodiment)
FIG. 29 is a diagram showing an example of a cell phone using the image coding method and the image decoding method of the present invention. (Sixth embodiment)
FIG. 30 is a block diagram showing the above cell phone. (Sixth embodiment)
FIG. 31 is a diagram showing an example of a system for digital broadcast.

### Numerical References

- 100: Image coding device
- 101: Image coding unit
- 102: Optimal parameter extraction unit
- 102a - 102d: Parameter extraction units
- 201, 202: Discrete cosine transform units
- 203: Extraction unit
- 301: Coefficient correction unit
- 302: Correction pattern holding unit
- 303: Distance calculation unit
- 304: Optimal value detection unit
- 1500: Image decoding device
- 1501: Image decoding unit
- 1502: Optimal image quality improvement processing unit
- 1502a - 1502d: Image quality improvement processing units
- 1601: Discrete cosine transform unit
- 1602: Coefficient correction unit
- 1603: Correction pattern holding unit
- 1604: Inverse discrete cosine transform unit

### Best Mode for Carrying Out the Invention

The embodiments of the present invention will be described below with reference to the diagrams.

### (First Embodiment)

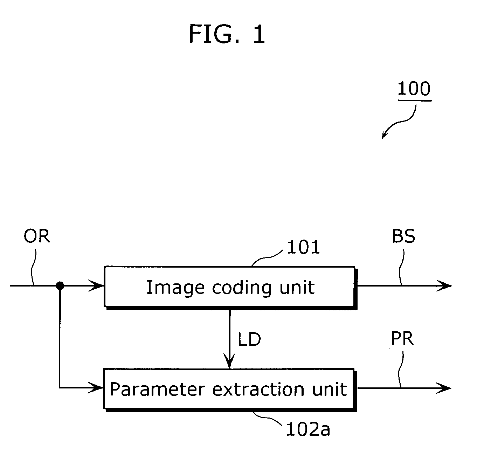

FIG. 1 is a block diagram of an image coding device 100 using an image coding method in the first embodiment of the present invention. As shown in FIG. 1, the image coding device 100 includes an image coding unit 101 and a parameter extraction unit 102a.

An input image OR is inputted into the image coding unit 101. The image coding unit 101 codes the input image OR using the image coding method defined in the standard. As such image coding method defined in the standard, the Joint Phtographic Experts Group (JPEG) method or the Moving Picture Experts Group (MPEG) method which are the ISO/IEC standards, the H.26x method which is the ITU-T standard, or the like, can be used. The image coding unit 101 outputs a bit stream BS obtained by coding the input image OR and a local decoded image LD obtained by decoding the coded input image OR. The bit stream BS is outputted outside the image coding device 100, and subjected to the processing such as transmission and storage.

The local decoded image LD is inputted into the parameter extraction unit 102a. The input image OR is also inputted to the parameter extraction unit 102a. The parameter extraction unit 102a extracts an image quality improvement parameter PR for making the local decoded image LD more closely resemble the input image OR, using the input image OR and the local decoded image LD. The image quality improvement parameter PR is outputted outside the image coding device 100, and subjected to processing such as transmission and storage, together with the bit stream BS.

The parameter extraction unit 102a may include the image quality improvement parameter PR into the header area or user data area of the bit stream BS, or may output it as another bit stream in addition to the bit stream BS.

One example of the processing performed in the parameter extraction unit 102a when obtaining an image quality improvement parameter PR is described below.

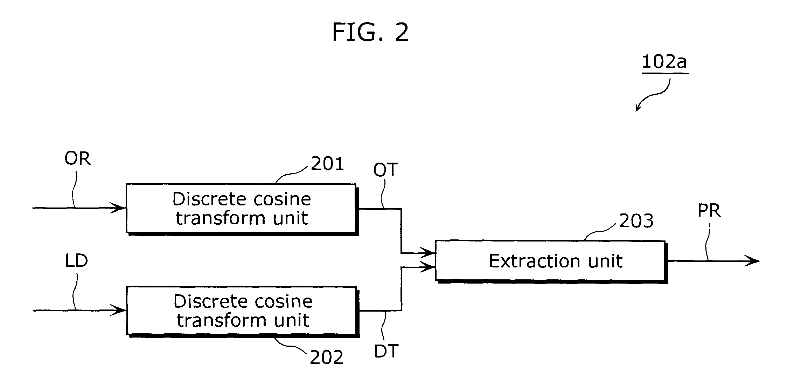

FIG. 2 is a block diagram showing a structure example of the parameter extraction unit 102a.

The parameter extraction unit 102a includes a discrete cosine transform units 201 and 201, and an extraction unit 203. The discrete cosine transform unit 201 performs discrete cosine transform on the input image OR so as to output discrete cosine transform coefficients OT. The discrete cosine transform unit 202 performs discrete cosine transform on the local decoded image LD so as to output discrete cosine transform coefficients DT. For example, such discrete cosine transform may be performed, on a block-by-block basis, on the input image OR and the local decoded image LD which are divided into blocks, each consisting of horizontal 8 pixels by vertical 8 pixels. Or these images may be divided into blocks of unequal size in each part of the image. In this case, it is possible to use a method, for example, in which larger blocks are used in plain parts while smaller blocks are used in complex parts including edges and the like.

The discrete cosine transform coefficients OT and DT obtained for the input image OR and the local decoded image LD respectively in the discrete cosine transform units 201 and 202 are inputted into the extraction unit 203. The extraction unit 203 extracts, based on the frequency distributions of the discrete cosine transform coefficients OT and DT for the input image OR and the local decoded image LD, a parameter for obtaining the frequency distribution of the discrete cosine transform coefficients OR for the input image OR from the frequency distribution of the discrete cosine transform coefficients DT for the local decoded image LD.

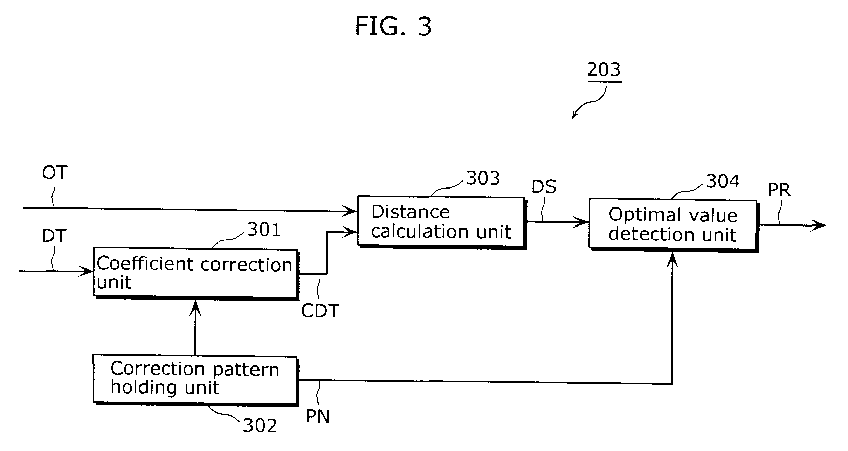

FIG. 3 is a block diagram showing one example of a structure of the extraction unit 203. As shown in FIG. 3, the extraction unit 203 includes a coefficient correction unit 301, a correction pattern holding unit 302, a distance calculation unit 303 and an optimal value detection unit 304.

The discrete cosine transform coefficient DT of the local decoded image LD is inputted to the coefficient correction unit 301. The coefficient correction unit 301 makes corrections of the discrete cosine transform coefficients DT of the local decoded image LD using the correction patterns held in the correction pattern holding unit 302 one by one.

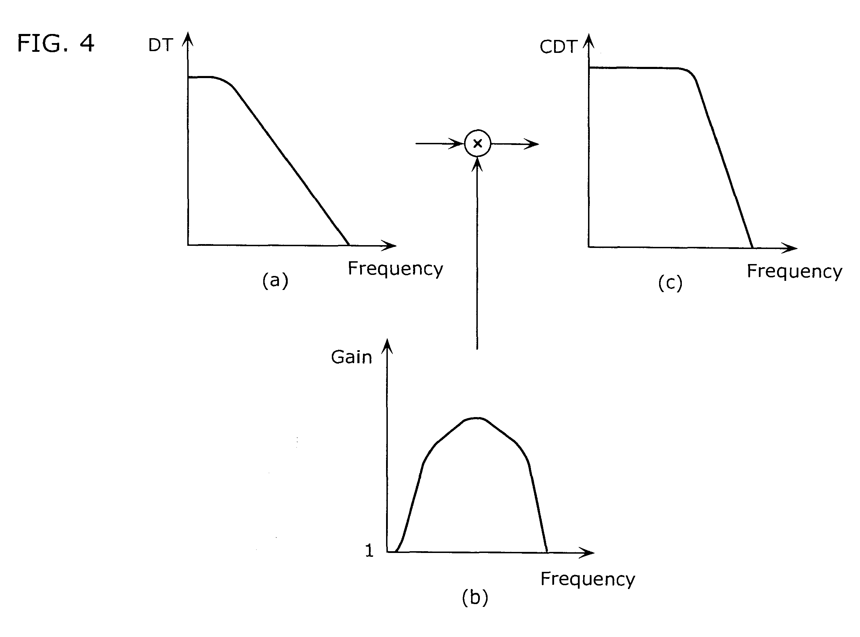

FIG. 4 is a schematic diagram for explaining a processing method in the coefficient correction unit 301. FIG. 4 (a) shows a frequency distribution of discrete cosine transform coefficients DT of the local decoded image LD. Here, the discrete cosine transform coefficients DT are represented as one-dimensional data for simplicity, but they are actually two-dimensional data. FIG. 4 (b) shows a correction pattern. The correction pattern has different gains from frequency to frequency.

The coefficient correction unit 301 obtains the frequency distribution of discrete cosine transform coefficients CDT shown in FIG. 4 (c) by multiplying the frequency distribution of discrete cosine transform coefficients DT of the local decoded image LD shown in FIG. 4 (a) by the correction pattern shown in FIG. 4 (b). Then, the coefficient correction unit 301 outputs the discrete cosine transform coefficients CDT to the distance calculation unit 303.

The above-mentioned discrete cosine transform coefficients CDT and the discrete cosine transform coefficients OT of the input image OR are inputted to the distance calculation unit 303. The distance calculation unit 303 calculates the distance DS between the discrete cosine transform coefficients CDT and the discrete cosine transform coefficients OT of the input image OR. As this distance DS, the sum of squares, the weighted sum of squares and the like, for example, of the difference value between the coefficients corresponding to each frequency can be used. Then, the distance calculation unit 303 outputs this distance DS to the optimal value detection unit 304.

The processing by the above coefficient correction unit 301 and the distance calculation unit 303 are repeated by the number of correction patterns held in the correction pattern holding unit 302. The optimal value detection unit 304 detects the correction pattern by which the shortest distance DS is derived. The number PN of this correction pattern is the number of the optimal correction pattern. The optimal value detection unit 304 outputs the number PN of this optimal correction pattern as an image quality improvement parameter PR.

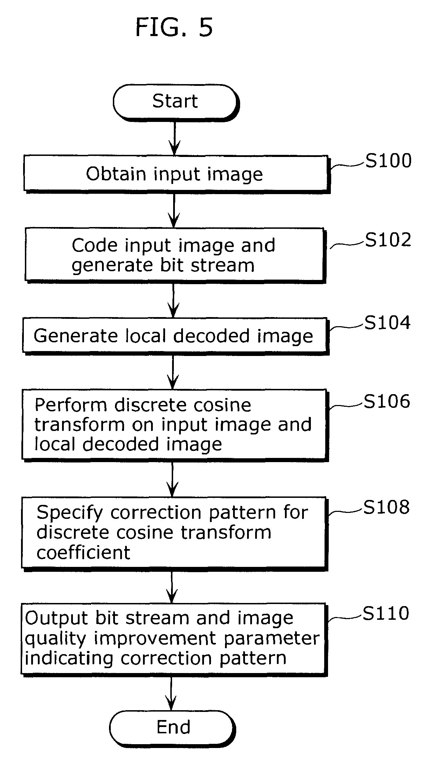

FIG. 5 is a flowchart showing the operation of the image coding device 100 in the present embodiment.

First, the image coding device 100 obtains an input image OR (Step S100), codes the input image OR so as to generate a bit stream BS (Step S102). Then, the image coding device 100 decodes the coded input image OR so as to generate a local decoded image LD (Step S104).

Next, the image coding device 100 performs discrete cosine transform on the input image OR and the local decoded image LD so as to generate discrete cosine transform coefficients OT and DT (Step S106). Then, the image coding device 100 specifies the correction pattern for making the discrete cosine transform coefficients DT of the local decoded image LD more closely resemble the discrete cosine transform coefficients OT of the input image OR (Step S108).

After specifying the correction pattern, the image coding device 100 outputs the bit stream BS generated in Step S102 and the image quality improvement parameter PR indicating the correction pattern specified in Step S108 (Step S110).

As described above, according to the image coding method of the present embodiment, an input image is coded by the image coding method defined by the standard (such as the JPEG or MPEG standard), and then an image quality improvement parameter for generating image quality improvement components is generated using the frequency components of the input image and the local decoded image. This image quality improvement parameter is a parameter for making the local decoded image more closely resemble the input image, and is obtained using discrete cosine transform.

Therefore, by the use of the image coding method of the present embodiment, it becomes possible to generate not only a bit stream compatible with the image coding method defined by the standard (such as the JPEG or MPEG standard), but also an image quality improvement parameter. Since this image quality improvement parameter is a parameter generated based not on the image data but on the frequency components of the input image and the local decoded image, it is possible to significantly reduce an amount of data and thus to improve the quality of the decoded image with a small increase in information amount. For example, in the case where an image decoding device, which has received the bit stream generated by the image coding method of the present embodiment, supports only the decoding of a bit stream generated by the image coding method defined by the standard (such as the JPEG or MPEG standard), it can decode only the bit stream BS so as to reproduce the image, though it is low quality. In the case where the image decoding device is capable of processing an image quality improvement parameter PR, a high quality image can be reproduced. In other words, by the use of the image coding method of the present embodiment, it is possible to significantly enhance the image quality with only a small increase in the amount of bits, compared with other image coding methods defined by the standards. According to the method of the present invention having a so-called scalable coding function, it is also possible to significantly reduce an amount of bits, compared with a conventional image coding method having such scalable function.

Note that in the above-mentioned embodiment, the parameter extraction unit 102a calculates the discrete cosine transform coefficients of the input image OR and the local decoded image LD, but for example, if the image coding unit 101 performs coding using such discrete cosine transform coefficients (for example, in the case of MPEG method), the discrete cosine transform coefficients calculated by the image coding unit 101 can be used as they are, in place of using other discrete cosine transform coefficients calculated by the parameter extraction unit 102a. By doing so, an amount of calculation can be reduced.

### (First Modification)

Here, the first modification of the method for generating an image quality improvement parameter PR is described below.

A parameter extraction unit of an image coding device of the present modification performs discrete wavelet transform, in place of discrete cosine transform, so as to generate an image quality improvement parameter PR.

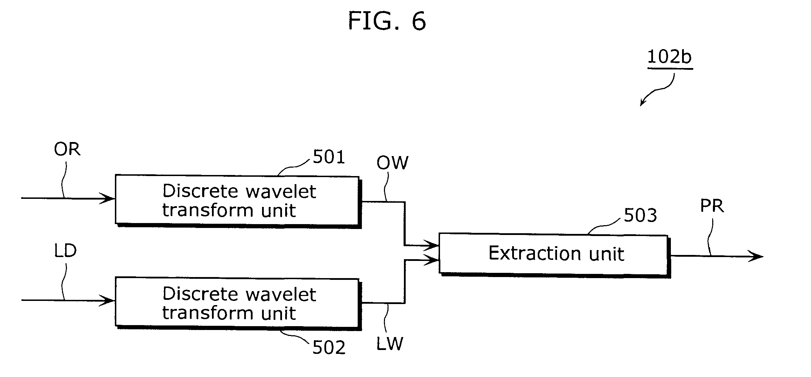

FIG. 6 is a block diagram showing one example of the structure of the parameter extraction unit of the present modification.

This parameter extraction unit 102b includes discrete wavelet transform units 501 and 502 and an extraction unit 503. The discrete wavelet transform unit 501 performs discrete wavelet transform on an input image OR so as to output discrete wavelet transform coefficients OW. The discrete wavelet transform unit 502 performs discrete wavelet transform on a local decoded image LD so as to output discrete wavelet transform coefficients LW. Such discrete wavelet transform can be performed, for example, on the full frame of the input image OR and the local decoded image LD. Or, it may be performed on each area of the image frame after being divided into areas. In this case, the frame may be divided into areas according to the complexity (or simplicity) of the image.

The discrete wavelet transform coefficients OW and LW of the input image OR and the local decoded image LD obtained by the discrete wavelet transform units 501 and 502 are inputted to the extraction unit 503.

Based on the frequency distributions of the discrete wavelet transform coefficients OW and LW of the input image OR and the local decoded image LD respectively, the extraction unit 503 calculates an image quality improvement parameter PR for obtaining the frequency distribution of the discrete wavelet transform coefficients OW of the input image OR from the frequency distribution of the discrete wavelet transform coefficients LW of the local decoded image LD.

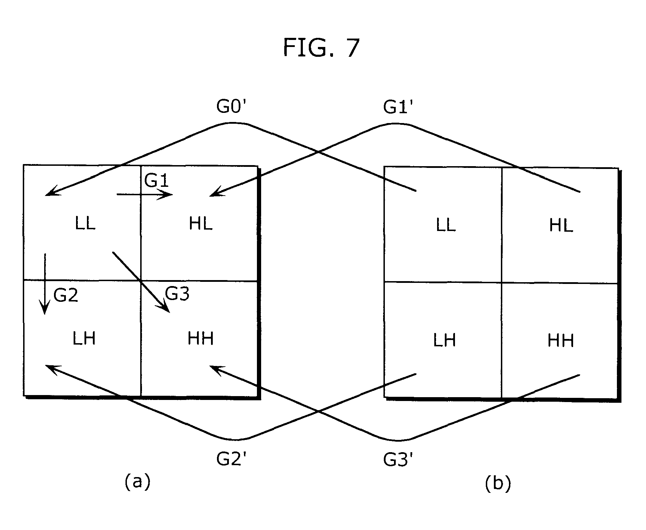

One example of how to obtain an image quality improvement parameter PR is described with reference to FIG. 7.

FIG. 7 is a schematic diagram showing the case where an input image OR and a local decoded image LD are represented, as multi-resolution representations, using discrete wavelet transform coefficients. Here, this diagram shows the case where discrete wavelet transform is performed once in the horizontal direction and once in the vertical direction. In the signs "LL", "HL", "LH" and "HH" shown in FIG. 7, "L" indicates a low frequency component and "H" indicates a high frequency component. As for the sequence of two characters, the first one indicates a horizontal frequency and the second one indicates a vertical frequency. Therefore, for example, the sign "LH" indicates an image component having a low horizontal frequency component and a high vertical frequency component. FIG. 7 (a) shows a multi-resolution representation of the input image OR obtained using the discrete wavelet transform coefficients OW thereof, while FIG. 7 (b) shows a multi-resolution representation of the local decode image LD obtained using the discrete wavelet transform coefficients LW thereof.

The extraction unit 503 calculates a gain G0' of the LL component of the input image OR with respect to the LL component of the local decoded image LD, a gain G1' of the HL component of the input image OR with respect to the HL component of the local decoded image LD, a gain G2' of the LH component of the input image OR with respect to the LH component of the local decoded image LD, and a gain G3' of the HH component of the input image OR with respect to the HH component of the local decoded image LD, and outputs these gains as an image quality improvement parameter PR.

As such, in the present modification, since this image quality improvement parameter PR is a parameter generated based not on the image data but on the frequency components of the input image and the local decoded image, as is the case with the above-described embodiment, a data amount can be significantly reduced.

Here, in the present modification, the gains G0', G1', G2' and G3' are assumed as an image quality improvement parameter PR, but other gains may be such image quality improvement parameter PR.

For example, the extraction unit 503 calculates a gain G1 of the HL component of the input image OR with respect to the LL component of the input image OR, a gain G2 of the LH component of the input image OR with respect to the LL component of the input image OR and a gain G3 of the HH component of the input image OR with respect to the LL component of the input image OR. This calculation can be carried out by, for example, calculating the energy value of each component and finding the ratio between them. Then, the extraction unit 503 outputs these gains as an image quality improvement parameter PR.

The extraction unit 503 may also output the above gains G1, G2, G3, G0', G1', G2' and G3' as an image quality improvement parameter PR.

Note that in the present modification, the discrete wavelet transform coefficients for the input image OR and the local decoded image LD respectively are obtained using the discrete wavelet transform units 501 and 502, but for example, if the image coding unit 101 performs coding using such discrete wavelet transform coefficients (for example, in the case of the JPEG 200 method), the discrete wavelet transform coefficients calculated by the image coding unit 101 can be used as they are, in place of using other discrete wavelet transform coefficients calculated by the parameter extraction unit 102b. By doing so, an amount of calculation can be reduced.

In the present modification, in the case where wavelet transform is performed on each of the divided areas of the input image OR and the local decoded image LD, an image quality improvement parameter PR to be transmitted may vary from area to area. Or, the image frame may be divided into areas after the wavelet transform is performed on the full frame so as to generate different image quality improvement parameters PR for respective areas. By doing so, it becomes possible to generate image quality improvement parameters PR for enabling more delicate processing, though the number of image quality improvement parameters PR increases.

### (Second Modification)

Here, the second modification of the method for generating an image quality improvement parameter PR is described below.

The parameter extraction unit of the image coding device of the present modification extracts edge components in place of performing discrete cosine transform, so as to generate an image quality improvement parameter PR.

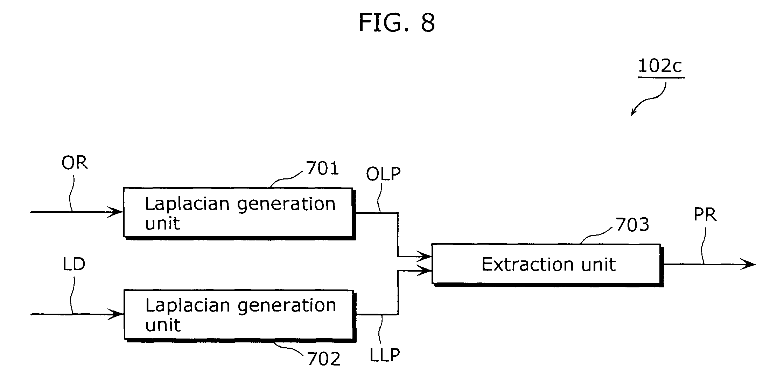

FIG. 8 is a block diagram showing one example of the structure of the parameter extraction unit in the present modification.

This parameter extraction unit 102c includes a Laplacian generation units 701 and 702, and an extraction unit 703. The Laplacian generation unit 701 generates a Laplacian image OLP from an input image OR, and the Laplacian generation unit 702 generates a Laplacian image LLP from a local decoded image LD. Such processing can be performed, for example, on the full frame of the input image OR and the local decoded image LD. Or, it may be performed on each area of the image frame. In this case, the frame may be divided into areas according to the complexity (or simplicity) of the image.

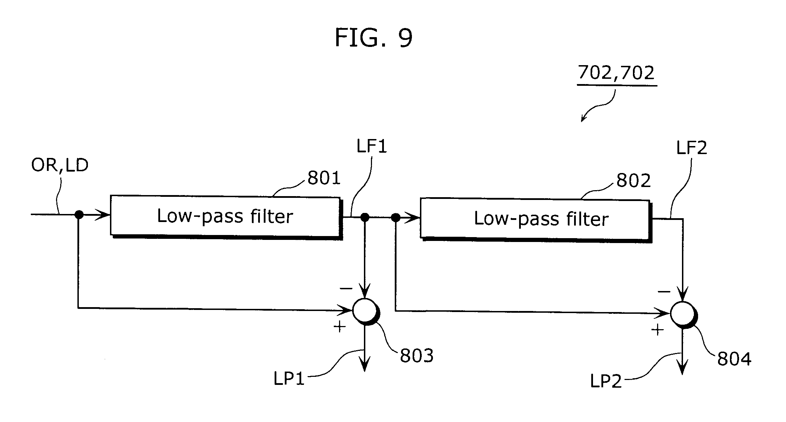

The processing method by the Laplacian generation units 701 and 702 is described below with reference to FIG. 9.

FIG. 9 is a block diagram of the Laplacian generation units 701 and 702.

The Laplacian generation units each have low-pass filters 801 and 802 and subtraction units 803 and 804.

In the Laplacian generation unit 701, the low-pass filter 801 first performs Gaussian low-pass filtering on the input image OR so as to generate a low frequency component image LF1. Then, the subtraction unit 803 subtracts the low frequency component image LF1 from the input image OR so as to generate a first-level Laplacian image LP1. Next, the low-pass filter 802 performs Gaussian low-pass filtering on the low frequency component image LF1 so as to generate a low frequency component image LF2. Then, the subtraction unit 804 subtracts the low frequency component image LF2 from the low frequency component image LF1 so as to generate a second-level Laplacian image LP2.

The first-level and second-level Laplacian images LP1 and LP2 of the input image OR generated as mentioned above are outputted as the above-mentioned Laplacian images OLP.

As with the above processing, in the Laplacian generation unit 702, the low-pass filter 801 first performs Gaussian low-pass filtering on the local decoded image LD so as to generate a low frequency component image LF1. Then the subtraction unit 803 subtracts the low frequency component image LF1 from the local decoded image LD so as to generate a first-level Laplacian image LP1. Next, the low-pass filter 802 performs Gaussian low-pass filtering on the low frequency component image LF1 so as to generate a low frequency component image LF2. Then, the subtraction unit 804 subtracts the low frequency component image LF2 from the low frequency component image LF1 so as to generate a second-level Laplacian image LP2.

The first-level and second-level Laplacian images LP1 and LP2 of the local decoded image LD generated as mentioned above are outputted as the above-mentioned Laplacian images LLP.

This processing method by the Laplacian generation units 701 and 702 shows that a Laplacian image is generated by subtracting low frequency components of an input image from the input image. In other words, a Laplacian image is an image generated by a kind of high-pass filter, and thus the edge components of the image can be extracted. The higher the level of the Laplacian image becomes, the lower the band of the edge components which can be extracted is.

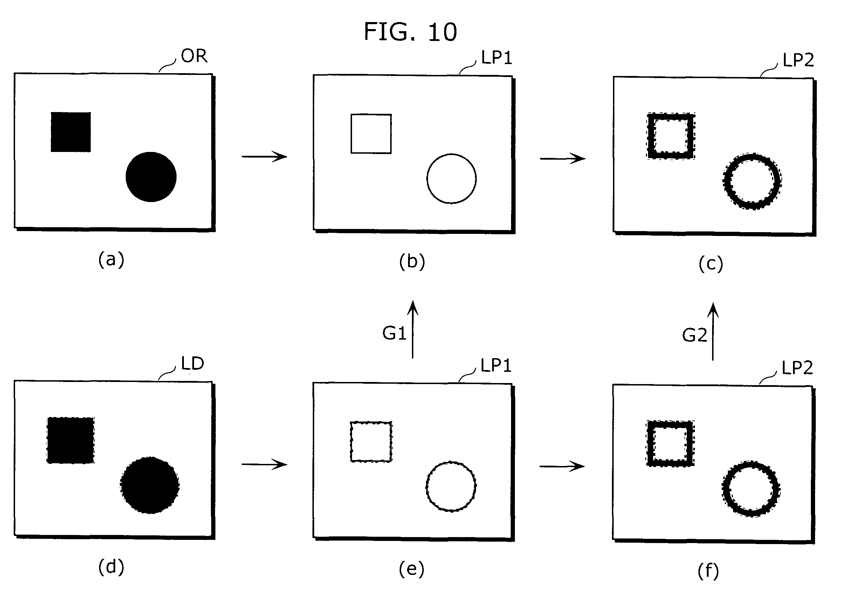

FIG. 10 is a diagram showing one example of Laplacian images. FIG. 10 (a) shows an input image OR, and FIG. 10 (b) and (c) respectively show first-level and second-level Laplacian images LP1 and LP2 of the input image OR. FIG. 10 (d) shows a local decoded image LD, and FIG. 10 (e) and (f) respectively show first-level and second-level Laplacian images LP1 and LP2 of the local decoded image LD.

The extraction unit 703 extracts a parameter by comparing the Laplacian images of the same level between the input image OR and the local decoded image LD. For example, this parameter is a gain G1 for obtaining the first-level Laplacian image LP1 of the input image OR from the first-level Laplacian image LP1 of the local decoded image LD, and a gain G2 for obtaining the second-level Laplacian image LP2 of the input image OR from the second-level Laplacian image LP2 of the local decoded image LD. The extraction unit 703 outputs these gains as an image quality improvement parameter PR.

As such, in the present modification, since this image quality improvement parameter PR is a parameter generated based not on the image data but on the frequency components of the input image and the local decoded image, as is the case with the above-described embodiment, a data amount can be significantly reduced.

Note that in the present modification, the first-level and second-level Laplacian images LP1 and LP2 are obtained, but Laplacian images of more levels may be obtained, and further information indicating to what level of Laplacian images have been obtained may be included into the image quality improvement parameter PR.

In the present modification, in the case where a Laplacian image is generated for each of the divided areas of the input image OR and the local decoded image LD, an image quality improvement parameter PR to be transmitted may vary from area to area. Or, the image frame may be divided into areas after Laplacian images are generated for the full frames so as to generate different image quality improvement parameters PR for respective areas. By doing so, it becomes possible to generate image quality improvement parameters PR for enabling more delicate processing, though the number of image quality improvement parameters PR increases.

### (Third Modification)

Here, the third modification of the method for generating an image quality improvement parameter PR is described below.

The parameter extraction unit of the image coding device of the present modification generates an image quality improvement parameter PR using filtering by a point spread function, in place of discrete cosine transform.

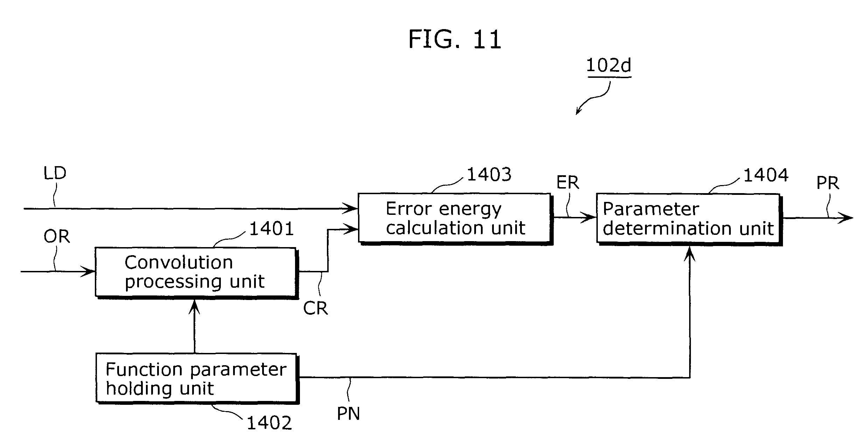

FIG. 11 is a block diagram showing one example of the structure of the parameter extraction unit of the present modification.

This parameter extraction unit 102d obtains the parameter of a point spread function, assuming that an image obtained by performing filtering of a point spread function (by performing convolution processing) on an input image OR is a local decoded image LD. Here, since the point spread function is generally approximated as a Gaussian function, the parameter here is assumed to be a parameter (standard deviation σ) of a Gaussian function.

To be more specific, this parameter extraction unit 102d includes a convolution processing unit 1401, a function parameter holding unit 1402, an error energy calculation unit 1403 and a parameter determination unit 1404.

The function parameter holding unit 1402 holds predetermined parameters of a point spread function (for example, parameters of a Gaussian function). The convolution processing unit 1401 selects any parameter from among the parameters held in the function parameter holding unit 1402. Then, the convolution processing unit 1401 performs convolution processing on the input image OR using the selected parameter, and outputs the resulting image CR. The error energy calculation unit 1403 calculates the error energy ER between the image CR and the local decoded image LD. This error energy ER is inputted to the parameter determination unit 1404. Such error energy is calculated for each of the parameters of the point spread function held in the function parameter holding unit 1402.

The parameter determination unit 1404 selects the parameter of the point spread function having the lowest error energy ER, and outputs the number PN of that parameter as an image quality improvement parameter PR.

As such, in the present modification, since this image quality improvement parameter PR is a parameter generated not based on the image data but by performing frequency-based filtering on the input image, as is the case with the above-described embodiment, a data amount can be significantly reduced.

Note that in the present modification, convolution processing is performed on the input image OR so as to obtain the parameter of the point spread function with the lowest error energy between the result of that processing and the local decoded image LD, but such convolution processing may be performed on the local decoded image LD so as to obtain the parameter of the point spread function with the lowest error energy between the result of that processing and the input image OR.

In the present modification, the parameter of the point spread function for the full frame of the image is obtained, but the parameter of the point spread function for each of the divided areas of the frame may be obtained. In this case, information concerning such areas has to be included as image quality improvement parameters PR. By doing so, it becomes possible to generate image quality improvement parameters PR for enabling more delicate processing, though the number of image quality improvement parameters PR increases.

### (Fourth Modification)

Here, the fourth modification of the method for generating an image quality improvement parameter PR is described below.

The image coding device of the present modification includes an optimal parameter extraction unit, in place of the parameter extraction unit 102a shown in FIG. 1.

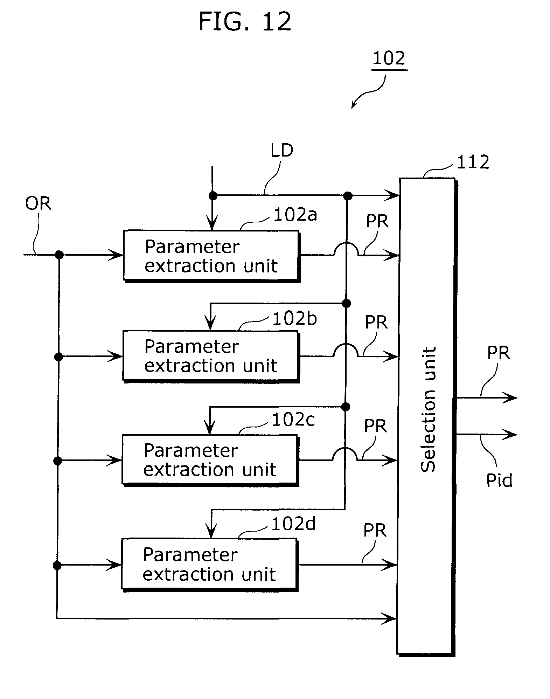

FIG. 12 is a block diagram showing the structure of the optimal parameter extraction unit of the present modification.

This optimal parameter extraction unit 102 includes parameter extraction units 102a, 102b, 102c and 102d, and a selection unit 112.

The parameter extraction units 102a, 102b, 102c and 102d each obtain an input image OR and a local decoded image LD, as described above, and output an image quality improvement parameter PR based on their own processing procedures.

The selection unit 112 obtains the image quality improvement parameters PR outputted from the parameter extraction units 102a, 102b, 102c and 102d. Then, the selection unit 112 selects, from among these image quality improvement parameters PR, the best image quality improvement parameter PR for making the local decoded image LD more closely resemble the input image OR.

More specifically, the selection unit 112 generates a high quality decoded image from the local decoded image LD using each image quality improvement parameter PR outputted from each parameter extraction unit. Then, the selection unit 112 finds a high quality decoded image which most closely resembles the input image OR, from among the high quality decoded images generated using the respective image quality improvement parameters PR, and selects the image quality improvement parameter PR used for generating that high quality decoded image.

The selection unit 112 outputs the image quality improvement parameter PR selected as such and an identifier Pid indicating the generation method of that image quality improvement parameter PR.

Accordingly, in the present modification, the optimal image quality improvement parameter PR can be generated. In addition, since the identifier Pid indicating the generation method of the image quality improvement parameter PR is outputted as well as the image quality improvement parameter PR itself, it is possible in the image decoding device to generate, from the bit stream, a high quality decoded image which more closely resembles the input image OR, using that image quality improvement parameter PR.

Note that in the present modification, all of the parameter extraction units 102a, 102b, 102c and 102d generate image quality improvement parameters PR for the input image OR, but any one of the parameter extraction units may generate such image quality improvement parameters PR depending on the input image OR or a predetermined condition.

In the first through fourth modifications, image quality improvement parameters PR are generated using discrete cosine transform coefficients, discrete wavelet transform coefficients, Laplacian images and a point spread function, but the image quality improvement parameters PR may be generated using other frequency transform methods such as Fourier transform and Hadamard transform, other image processing methods such as an edge image generation method using a Sobel operator and an edge image generation method using a Gabor function.

### (Second Embodiment)

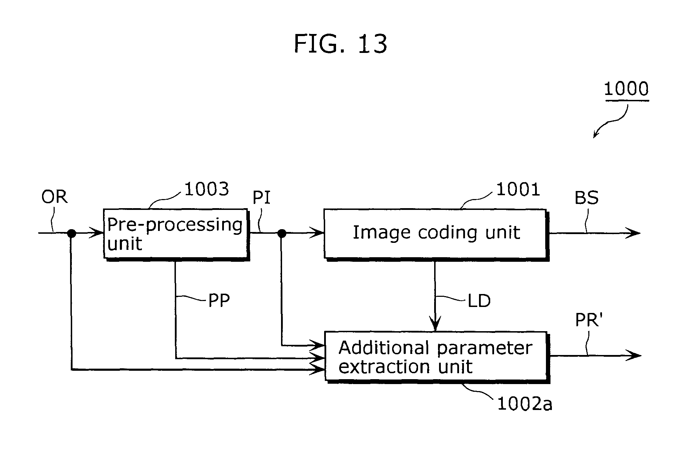

FIG. 13 is a block diagram of an image coding device 1000 using the image coding method in the second embodiment of the present invention. As shown in FIG. 13, the image coding device 1000 includes an image coding unit 1001, an additional parameter extraction unit 1002a and a pre-processing unit 1003.

An input image OR is inputted to the pre-processing unit 1003. The pre-processing unit 1003 performs, on the input image OR, the processing such as reduction of the image size, filtering by a low-pass filter and/or reduction of the frame rate by thinning out frames in the time domain. All these processing may be performed, or any one of them may be performed. The pre-proceeding unit 1003 outputs the pre-processed image PI generated by the above processing to the image coding unit 1001 and the additional parameter extraction unit 1002a. Then, the pre-processing unit 1003 outputs the processing performed on the input image OR and the parameter of that processing (for example, a reduction ratio, a frequency characteristic of a low-pass filter, how to thin out frames, and the like) as a pre-processing parameter PP, to the additional parameter extraction unit 1002a.

The image coding unit 1001 carries out the image coding method defined by the standard on the inputted pre-processed image PI. As such image coding method defined by the standard, the JPEG method, the MPEG method, the H.26x method, or the like, can be used. The image coding unit 1001 outputs a bit stream BS obtained by coding the pre-processed image PI and the local decoded image LD. The bit stream BS is outputted outside the image coding device 1000, and subjected to the processing such as transmission and storage. The local decoded image LD is outputted to the additional parameter extraction unit 1002a.

The additional parameter extraction unit 1002a extracts an image quality improvement parameter PR' for making the local decoded image LD more closely resemble the input image OR, using any one of the inputted input image OR, pre-processing image PI, local decoded image LD and pre-processing parameter PP. The image quality improvement parameter PR' is outputted outside the image coding device 1000, and subjected to the processing such as transmission and storage, along with the bit stream BS.

As is the case with the parameter extraction unit 102a in the first embodiment, the additional parameter extraction unit 1002a may add the image quality improvement parameter PR' into the header area or the user data area of the bit stream BS, or may output it as another bit stream in addition to the coded bit stream BS.

One example of the processing performed in the additional parameter extraction unit 1002a when obtaining an image quality improvement parameter PR' is described below.

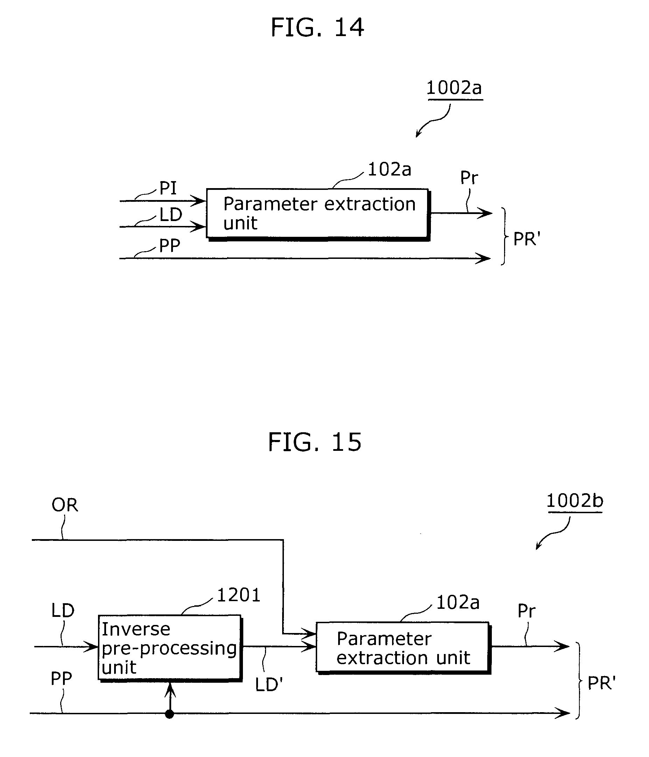

FIG. 14 is a block diagram showing one example of the structure of the additional parameter extraction unit 1002a. The additional parameter extraction unit 1002a includes the parameter extraction unit 102a as described in the first embodiment.

While the parameter extraction unit 102a described in the first embodiment obtains an input image OR and a local decoded image LD, the parameter extraction unit 102a in the present embodiment obtains a pre-processed image PI in place of the input image OR. The parameter extraction unit 102a in the present embodiment performs the processing on the obtained information and outputs a parameter Pr. The details of the processing performed by such parameter extraction unit 102a are same as those described in the first embodiment.

The additional parameter extraction unit 1002a outputs the parameter Pr outputted from the parameter extraction unit 102a and the pre-processing parameter PP, as an image quality improvement parameter PR'.

As described above, according to the image coding method of the present embodiment, an input image is coded by the image coding method defined by the standard (such as the JPEG standard or the MPEG standard), after the processing, such as reduction of the image size, filtering by a low-pass filter and/or reduction of the frame rate by thinning out frames in the time domain, is performed on the input image. Furthermore, image quality improvement parameters PR' for generating image quality improvement components are obtained using the input image OR, the local decoded image LD and the pre-processing parameter PP.

Therefore, by the use of the image coding method of the present embodiment, it is possible to generate not only a bit stream compatible with the image coding method defined by the standard (such as the JPEG or MPEG standard), but also an image quality improvement parameter. Since this image quality improvement parameter is a parameter generated based not on the image data but on the frequency components of the pre-processed image and the local decoded image, it is possible to significantly reduce an amount of data and thus to improve the quality of the decoded image with a small increase in information amount. It is also possible to reduce an amount of code itself of the bit stream BS because the pre-processing unit 1003 reduces an amount of data of the input image OR. For example, in the case where an image decoding device, which has received the bit stream BS generated by the image coding method of the present embodiment, supports only the decoding of a bit stream generated by the image coding method defined by the standard (such as the JPEG or MPEG standard), it can decode only the bit stream BS so as to reproduce the image, though it is low quality. In the case where the image decoding device is capable of processing an image quality improvement parameter PR', a high quality image can be reproduced. In other words, by the use of the image coding method of the present embodiment, it is possible to significantly enhance the image quality with only a small increase in the amount of bits, compared with other image coding methods defined by the standards. According to the method of the present embodiment having a so-called scalable coding function, it is also possible to significantly reduce an amount of bits, compared with a conventional image coding method having such scalable function.

### (Modification)

Here, a modification of a method for generating an image quality improvement parameter PR' is described below.

The additional parameter extraction unit of the image coding device of the present modification performs inverse pre-processing so as to generate an image quality improvement parameter PR'.

FIG. 15 is a block diagram showing one example of the structure of the additional parameter extraction unit 1002b in the present modification.

This additional parameter extraction unit 1002b includes an inverse pre-processing unit 1201 and the parameter extraction unit 102a described in the first embodiment.

A local decoded image LD and a pre-processing parameter PP are inputted to the inverse pre-processing unit 1201. The inverse pre-processing unit 1201 performs the processing inverse to the processing performed on the local decoded image LD by the pre-processing unit 1003. For example, in the case where the pre-processing unit 1003 has performed the processing for reducing the image size, the inverse pre-processing unit 1201 performs the processing for enlarging it. In the case where the pre-processing unit 1003 has performed the filtering using a low-pass filter, the inverse pre-processing unit 1201 performs the processing inverse to the filtering by the low-pass filter. In the case where the pre-processing unit 1003 has performed the processing for reducing the frame rate by thinning out frames in the time domain, the inverse pre-processing unit 1201 performs the processing for increasing the frame rate. The inverse pre-processing unit 1201 outputs the local decoded image LD' on which such processing has been performed to the parameter extraction unit 102a.

While the parameter extraction unit 102a described in the first embodiment obtains an input image OR and a local decoded image LD, the parameter extraction unit 102a in the present modification obtains a local decoded image LD' processed by the inverse pre-processing unit 1201 in place of the local decoded image LD. The parameter extraction unit 102a in the present modification performs the processing on the above obtained information and outputs a parameter Pr. The details of the processing performed by such parameter extraction unit 102a are same as those described in the first embodiment.

The additional parameter extraction unit 1002b outputs the parameter Pr outputted from the parameter extraction unit 102a and the pre-processing parameter PP, as an image quality improvement parameter PR'.

As such, in the present modification, since the pre-processing unit 1003 reduces an amount of data of an input image OR, as is the case with the above-mentioned embodiment, the amount of bits itself of a bit stream BS can be reduced.

Note that in the present embodiment and its modification, the additional parameter extraction units 1002a and 1002b each have the parameter extraction unit 102a in the first embodiment, but instead of the parameter extraction unit 102a, they may each include any one of the parameter extraction unit 102b in the first modification of the first embodiment, the parameter extraction unit 102c in the second modification of the first embodiment, the parameter extraction unit 102d in the third modification of the first embodiment and the optimal parameter extraction unit 102 in the fourth modification of the first embodiment.

### (Third Embodiment)

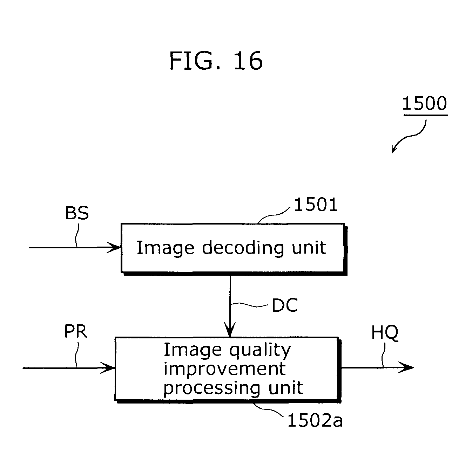

FIG. 16 is a block diagram of an image decoding device 1500 using the image decoding method in the third embodiment of the present invention. As shown in FIG. 16, the image decoding device 1500 includes an image decoding unit 1501 and an image quality improvement processing unit 1502a. The bit stream BS and the image quality improvement parameter PR which are generated by the image coding device using the image coding method of the present invention described in the first embodiment are inputted to the image decoding device 1500.

The bit stream BS is inputted to the image decoding unit 1501. The image decoding unit 1501 performs, on the bit stream BS, image decoding defined by the standard. For example, the image decoding unit 1501 decodes the bit stream BS in the JPEG format if it has been coded in the JPEG format, decodes the bit stream BS in the MPEG format if it has been coded in the MPEG format, and decodes the bit stream BS in the H.26x format if it has been coded in the H.26x format. Then, the image decoding unit 1501 outputs a decoded image DC to the image quality improvement processing unit 1502a.

Note that in the case where an image quality improvement parameter PR is included in the header area or the user data area of the bit stream BS, the image decoding unit 1501 separates the image quality improvement parameter PR from the obtained bit stream BS. Then, the image decoding unit 1501 outputs the separated image quality improvement parameter PR, together with the decoded image DC, to the image quality improvement processing unit 1502a.

The decoded image DC and the image quality improvement parameter PR are inputted to the image quality improvement processing unit 1502a. The image quality improvement processing unit 1502a performs the processing on the decoded image DC using the image quality improvement parameter PR, and outputs a high quality decoded image HQ.

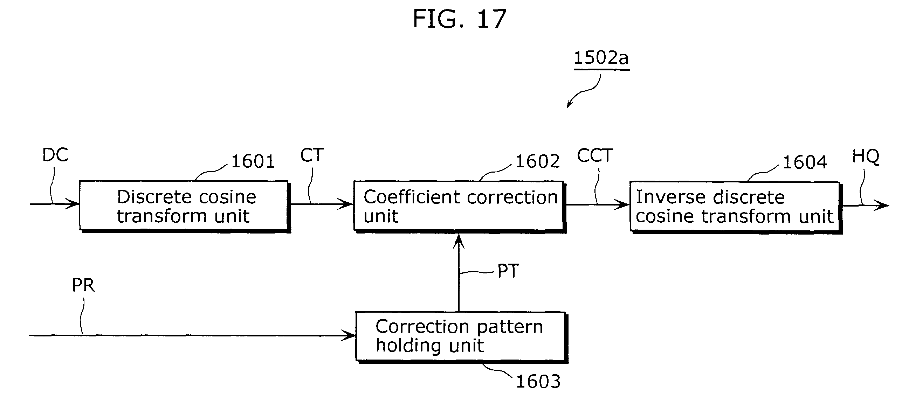

FIG. 17 is a block diagram showing one example of the structure of the image quality improvement processing unit 1502a. The image quality improvement processing unit 1502a includes a discrete cosine transform unit 1601, a coefficient correction unit 1602, a correction pattern holding unit 1603 and an inverse discrete cosine transform unit 1604.

The discrete cosine transform unit 1601 obtains the decoded image DC and performs discrete cosine transform on the decoded image DC. In performing discrete cosine transform, it may, for example, divide the decoded image DC into blocks of horizontal 8 pixels by vertical 8 pixels, and perform such processing on each of the blocks. The discrete cosine transform unit 1601 outputs discrete cosine transform coefficients CT obtained for the decoded image DC to the coefficient correction unit 1602.

The image quality improvement parameter PR is inputted to the correction pattern holding unit 1603. The correction pattern holding unit 1603 holds the same correction patterns as the patterns held in the correction pattern holding unit 302 described in the first embodiment. The correction pattern holding unit 1603 outputs, to the coefficient correction unit 1602, a correction pattern PT specified by the image quality improvement parameter PR from among the correction patterns held in itself.

The coefficient correction unit 1602 obtains the discrete cosine transform coefficients CT of the decoded image DC and the correction pattern PT, and makes a correction of the discrete cosine transform coefficients CT using the correction pattern PT. The coefficient correction unit 1602 makes the correction in the same manner as that described in the first embodiment using FIG. 4. Then, the coefficient correction unit 1602 outputs the discrete cosine transform coefficients CCT which are the corrected discrete cosine transform coefficients CT to the inverse discrete cosine transform unit 1604.

The inverse discrete cosine transform unit 1604 performs inverse discrete cosine transform on the discrete cosine transform coefficients CCT so as to generate and output a high quality decoded image HQ.

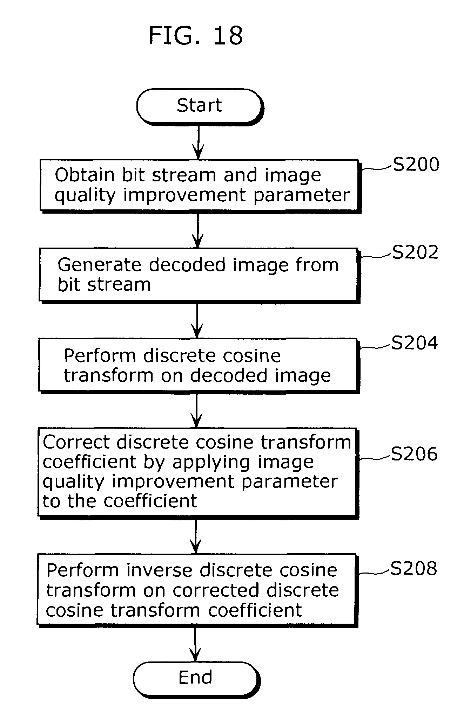

FIG. 18 is a flowchart showing the operation of the image decoding device 1500 in the present embodiment.

First, the image decoding device 1500 obtains a bit stream BS and an image quality improvement parameter PR from the image coding device (Step S200). Then, the image decoding device 1500 performs decoding processing on the bit stream BS obtained in Step S200 so as to generate a decoded image DC (Step S202).

Next, the image decoding device 1500 performs discrete cosine transform on the decoded image DC so as to generate discrete cosine transform coefficients CT (Step S204). Then, the image decoding device 1500 makes a correction of the discrete cosine transform coefficients CT by applying the correction pattern PT indicated by the image quality improvement parameter PR to the generated discrete cosine transform coefficients CT (Step S206).

Then, the image decoding device 1500 performs inverse discrete cosine transform on the corrected discrete cosine transform coefficients CT, namely the discrete cosine transform coefficients CCT, so as to generate the high quality decoded image HQ (Step S208).

As described above, in the image decoding method of the present embodiment, not only the bit stream BS generated by performing coding using the image coding method defined by the standard (such as the JPEG standard and the MPEG standard) but also the image quality improvement parameter PR are obtained. Then, the bit stream BS is decoded by the image decoding method defined by the standard so as to generate a decoded image DC, and image processing is performed on the decoded image DC using the image quality improvement parameter PR so as to generate a high quality decoded image HA. In the processing using such image quality improvement parameter PR, it is possible to add high frequency components, which are not included in the decoded image DC, to the decoded image DC, using discrete cosine transform or the like.

Therefore, according to the image decoding method of the present embodiment, it is possible to decode a bit stream BS using the image decoding method defined by the standard (such as the JPEG standard and the MPEG standard) so as to generate a decoded image DC, and further to enhance the quality of the decoded image DC using an image quality improvement parameter PR. Since this image quality improvement parameter PR is a parameter generated by the image coding device based not on image data but on the frequency components of an input image (original image) and a local decoded image, it is possible to significantly reduce an amount of data and thus to enhance the quality of the image with a small increase in information amount. In other words, by the use of the image decoding method in the present embodiment, it is possible to significantly enhance the image quality with a small increase in the amount of bits, compared with the image decoding method defined by the standard. In addition, according the decoding method in the present embodiment having a scalable decoding function, it is also possible to significantly reduce an amount of bits, compared with a conventional image coding method having such scalable function.

Note that in the present embodiment, the discrete cosine transform unit 1601 obtains discrete cosine transform coefficients CT of a decoded image DC, but, for example, if a bit stream BS has been coded using discrete cosine transform coefficients (for example, in the MPEG format), the image decoding unit 1501 may use the discrete cosine transform coefficients obtained from the bit stream BS. By doing so, an amount of calculation can be reduced.

In the present modification, in the case where an image quality improvement parameter PR is generated for each area, the coefficient correction unit 1602 performs coefficient correction processing on each area.

### (First Modification)

Here, the first modification of the method for generating a high quality decoded image HQ from a decoded image DC is described below.

The image quality improvement processing unit of the image decoding device in the present modification obtains the image quality improvement parameter PR generated by the parameter extraction unit 102b described in the first modification of the first embodiment. Then, the image quality improvement processing unit performs discrete wavelet transform and inverse discrete wavelet transform, in place of discrete cosine transform and inverse discrete cosine transform, on the decoded image DC, so as to generate a high quality decoded image HQ.

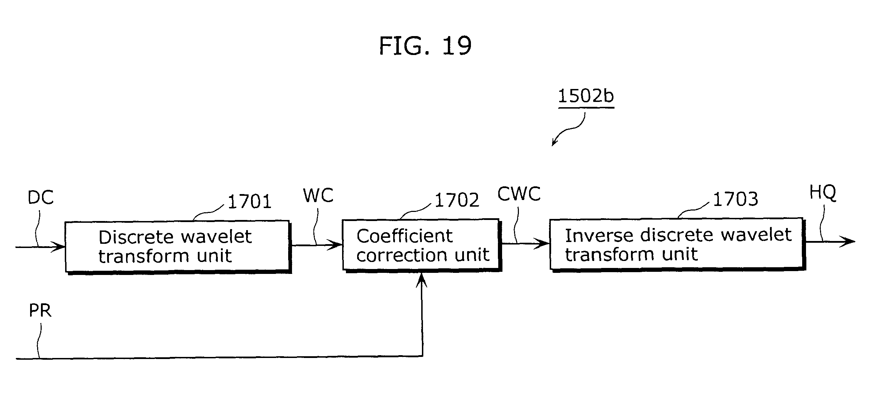

FIG. 19 is a block diagram showing one example of the structure of the image quality improvement processing unit in the present modification.

This image quality improvement processing unit 1502b includes a discrete wavelet transform unit 1701, a coefficient correction unit 1702 and an inverse discrete wavelet transform unit 1703.

The discrete wavelet transform unit 1701 performs discrete wavelet transform on a decoded image DC. Such discrete wavelet transform can be performed, for example, on the full frame of the local decoded image LD. Or, it may be performed on each area of the divided frame. In this case, the frame may be divided into areas according to the complexity (or simplicity) of the image. In this regard, the frame has to be divided into areas in the same manner as in the coding thereof.

The discrete wavelet transform unit 1701 outputs, to the coefficient correction unit 1702, discrete wavelet transform coefficients WC obtained for the decoded image DC.

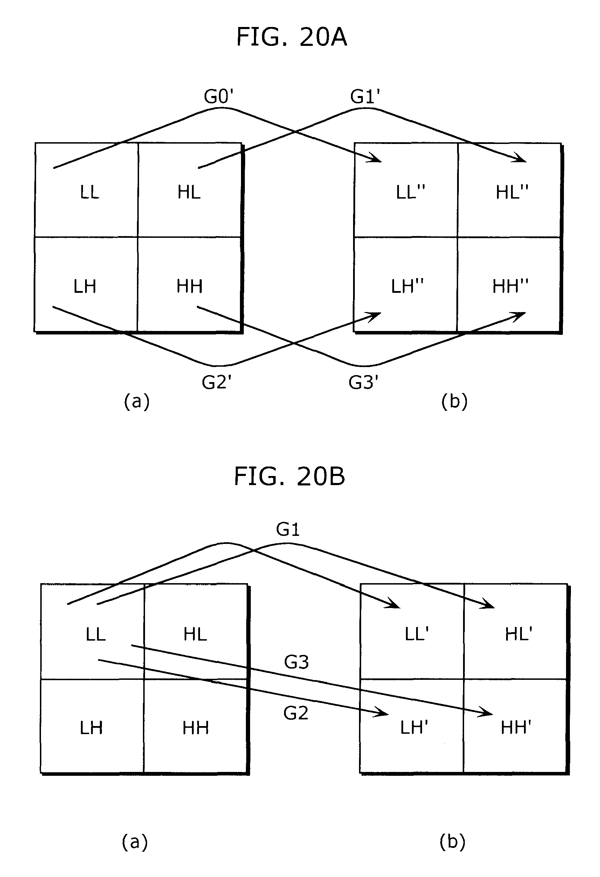

The discrete wavelet transform coefficients WC and the image quality improvement parameter PR are inputted to the coefficient correction unit 1702. The processing method in the coefficient correction unit 1702 is described using FIG. 20A and FIG. 20B.

FIG. 20A is a schematic diagram showing the case where a decoded image DC and a high quality decoded image HQ are represented, as multi-resolution representations, using discrete wavelet transform coefficients. The signs (such as "H" and "L") shown in FIG. 20A indicate the same ones as shown in FIG. 7. FIG. 20A (a) shows a multi-resolution representation of the decoded image DC using the discrete wavelet transform coefficients WC.

As shown in FIG. 20A (a), the coefficient correction unit 1702 performs gain corrections on the discrete wavelet transform coefficients of the LL component, HL component, LH component and HH component of the decoded image DC respectively, using the gains G0', G1', G2' and G3' as an image quality improvement parameter PR described in the first embodiment. As a result, as shown in FIG. 20A (b), discrete wavelet transform coefficients CWC having the LL" component, HL" component, LH" component and HH" component corresponding to the high quality decoded image HQ are generated.

Here, the coefficient correction unit 1702 performs gain corrections using the image quality improvement parameter PR indicating the above gains G0', G1', G2' and G3', but it may perform gain corrections using the image quality improvement parameter PR indicating the gains G1, G2 and G3 described in the first embodiment.

FIG. 20B is another schematic diagram showing the case where the decoded image DC and the high quality decoded image HQ are represented, as multi-resolution representations, using discrete wavelet transform coefficients. The signs (such as "H" and "L") shown in FIG. 20B indicate the same ones as shown in FIG. 7. FIG. 20B (a) shows a multi-resolution representation using the discrete wavelet transform coefficients WC of the decoded image DC.

As shown in FIG. 20B (a) and (b), the coefficient correction unit 1702 copies the LL component itself of the discrete wavelet transform coefficient WC corresponding to the decoded image DC, as the LL' component. The coefficient correction unit 1702 performs gain corrections on the HL component, LH component and HH component respectively of the discrete wavelet transform coefficient WC corresponding to the decoded image DC, using the gains G1, G2 and G3 as the image quality improvement parameter PR described in the first embodiment. As a result, as shown in FIG. 20B (b), the discrete wavelet transform coefficient CWC having the LL' component, HL' component, LH' component and HH' component corresponding to the high quality decoded image HQ is generated.

The coefficient correction unit 1702 may perform gain corrections using all of the above gains G1, G2, G3, G0', G1', G2' and G3'.

The inverse discrete wavelet transform unit 1703 performs inverse discrete wavelet transform on the discrete wavelet transform coefficient CWC generated by the corrections so as to generate and output the high quality decoded image HQ.

As is the case with the above-mentioned embodiment, according to the present modification, it is possible to decode a bit stream BS using the image decoding method defined by the standard (such as the JPEG standard and the MPEG standard) so as to generate a decoded image DC, and further to enhance the quality of the decoded image DC using an image quality improvement parameter PR. Since this image quality improvement parameter PR is a parameter generated by the image coding device based not on the image data but on the frequency components of an input image (original image) and a local decoded image, it is possible to significantly reduce an amount of data and thus to enhance the quality of the image with a small increase in information amount.

Note that in the present modification, the discrete wavelet transform unit 1701 obtains the discrete wavelet transform coefficient WC of a decoded image DC, but, for example, if a bit stream BS has been coded using a discrete wavelet transform coefficient (for example, in the JPEG2000 format), the image decoding unit 1501 may use the discrete wavelet transform coefficient obtained from the bit stream BS. By doing so, an amount of calculation can be reduced.

In the present modification, in the case where an image quality improvement parameter PR is generated for each area, the coefficient correction unit 1702 performs coefficient correction processing on each area.

### (Second Modification)

Here, the second modification of the method for generating a high quality decoded image HQ from a decoded image DC is described below.

The image quality improvement processing unit of the image decoding device in the present modification obtains the image quality improvement parameter PR generated by the parameter extraction unit 102c described in the second modification of the first embodiment. Then, the image quality improvement processing unit generates a high quality decoded image HQ by extracting edge components in place of performing discrete cosine transform and inverse cosine transform.

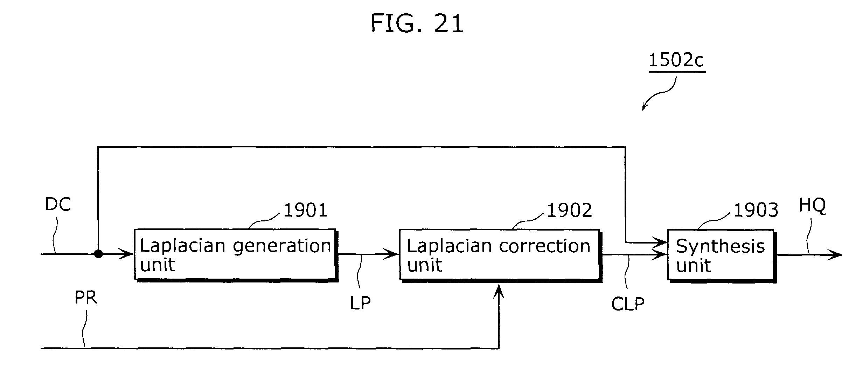

FIG. 21 is a block diagram showing one example of the structure of the image quality improvement processing unit in the present modification.

This parameter extraction unit 1052c includes a Laplacian generation unit 1901, a Laplacian correction unit 1902 and a synthesis unit 1903.

The Laplacian generation unit 1901 performs the processing on a decoded image DC so as to generate a Laplacian image LP. When generating a Laplacian image LP, such processing can be performed, for example, on the full frame of the decoded image DC. Or, it may be performed on each area of the divided frame. The structure of the Laplacian generation unit 1901 is same as that of the Laplacian generation units 701 and 702 in the second modification of the first embodiment, and the Laplacian generation unit 1901 performs the same processing as that described in the second modification of the first embodiment using FIG. 9. Here, for example, the Laplacian generation unit 1901 generates Laplacian images LP1 and LP2 of the first and second levels, as Laplacian images LP. Note that the level of the Laplacian image to be generated may be determined in the same manner as that in the coding method.

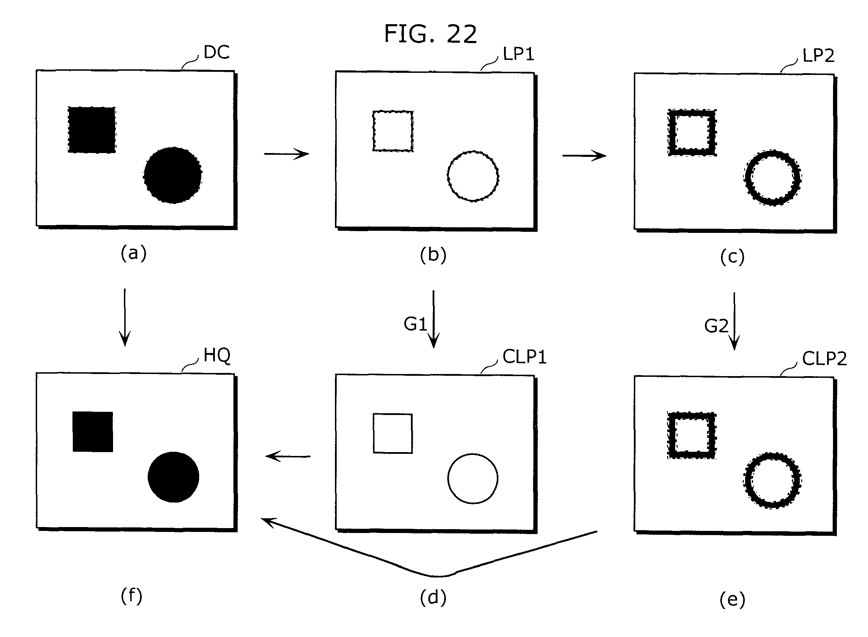

FIG. 22 is a diagram showing one example of Laplacian images LP obtained by the Laplacian generation unit 1901. FIG. 22 (a) shows a decoded image DC, and FIG. 22 (b) and (c) respectively show Laplacian images LP1 and LP2 of the first and second levels generated from the decoded image DC. The Laplacian generation unit 1901 outputs the generated Laplacian image LP to the Laplacian correction unit 1902.

The Laplacian correction unit 1902 obtains the Laplacian image LP and the image quality improvement parameter PR for correcting the Laplacian image LP. The Laplacian correction unit 1902 uses, as an image quality improvement parameter PR, the gains G1 and G2 described in the second modification of the first embodiment. As shown in FIG. 22, the Laplacian correction unit 1902 generates a Laplacian image CLP1 (FIG. 22 (d)) by applying the gain G1 to the Laplacian image LP1 of the first level (FIG. 22 (b)), and generates a Laplacian image CLP2 (FIG. 22 (e)) by applying the gain G2 to the Laplacian image LP2 of the second level (FIG. 22 (c)), and as a result, makes corrections of the Laplacian images LP1 and LP2. The Laplacian correction unit 1902 outputs the Laplacian images CLP1 and CLP2 generated by such corrections, as Laplacian images CLP, to the synthesis unit 1903.

The synthesis unit 1903 obtains the decoded image DC and the Laplacian images CLP, adds these images so as to generate and output a high quality image HQ (FIG. 22 (f)).

As such, as is the case with the above-mentioned embodiment, in the present modification, it is possible to decode a bit stream BS using the image decoding method defined by the standard (such as the JPEG standard and the MPEG standard) so as to generate a decoded image DC, and further to improve the quality of the decoded image DC using an image quality improvement parameter PR. Since this image quality improvement parameter PR is a parameter generated by the image coding device based not on the image data but on the frequency components of an input image (original image) and a local decoded image, it is possible to significantly reduce an amount of data and thus to enhance the quality of the image with a small increase in information amount.

Note that in the present modification, in the case where the image quality improvement parameter PR is generated for each area, the Laplacian correction unit 1902 performs the correction processing on each area.

### (Third Modification)

Here, the third modification of the method for generating a high quality decoded image HQ from a decoded image DC is described below.

The image quality improvement processing unit of the image decoding device in the present modification obtains the image quality improvement parameter PR generated by the parameter extraction unit 102d described in the third modification of the first embodiment. Then, the image quality improvement processing unit performs filtering using a point spread function in place of discrete cosine transform and inverse discrete cosine transform, so as to generate a high quality decoded image HQ.

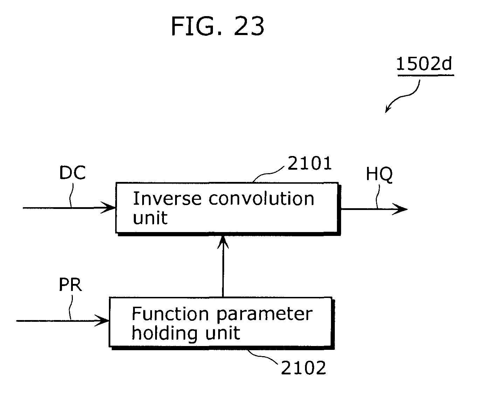

FIG. 23 is a block diagram showing one example of the structure of the image quality improvement processing unit in the present modification.

This image quality improvement processing unit 1502d includes an inverse convolution unit 2101 and a function parameter holding unit 2102.

The function parameter holding unit 2102 holds a plurality of predetermined parameters of the point spread function (for example, parameters of a Gaussian function: standard deviation σ). Here, it is assumed that the function parameter holding unit 2102 holds the same parameters as those held in the function parameter holding unit 1402 in the third modification of the first embodiment. The function parameter holding unit 2102 obtains an image quality improvement parameter PR. The number of that parameter of the point spread function is written in this image quality improvement parameter PR. The function parameter holding unit 2102 selects the parameter corresponding to that number from among the parameters of the point spread function held in itself, and outputs the selected parameter to the inverse convolution unit 2101.

The inverse convolution unit 2101 obtains the decoded image DC and the parameters of the point spread function, generates a high quality decoded image HQ by convoluting the function inverse to the function obtained from the obtained parameters into (by performing filtering on) the decoded image DC, and outputs the resulting high quality decoded image HQ.

As such, as is the case with the above-mentioned embodiment, in the present modification, it is possible to decode a bit stream using the image decoding method defined by the standard (such as the JPEG standard and the MPEG standard) so as to generate a decoded image DC, and further to improve the quality of the decoded image DC using an image quality improvement parameter PR. Since this image quality improvement parameter PR is a parameter generated based not on the image data but on the frequency components of an input image (original image) and a local decoded image, it is possible to significantly reduce an amount of data and thus to enhance the quality of the image with a small increase in information amount.

Note that in the present modification, the function parameter holding unit 2102 holds the same parameters as those held in the function parameter holding unit 1402 in the third modification of the first embodiment, but it may previously hold the parameters of the inverse function corresponding to the parameters held in the function parameter holding unit 1402. By doing so, the inverse convolution unit 2101 does not convolute the inverse function but performs normal convolution processing, which simplifies the processing.

In the present modification, the parameters of the point spread function for the full frame are obtained, but in the case where the parameter of the point spread function is specified in each area of the frame, the inverse function is convoluted using a parameter which varies from area to area.

### (Fourth Modification)

Here, the fourth modification of the method for generating a high quality decoded image HQ from a decoded image DC is described below.

The image decoding device of the present modification includes an optimal image quality improvement processing unit, in place of the image quality improvement processing unit 1502a shown in FIG. 16. This optimal image quality improvement processing unit obtains the image quality improvement parameter PR and the identifier Pid generated by the optimal parameter extraction unit 102 as described in the fourth modification of the first embodiment.

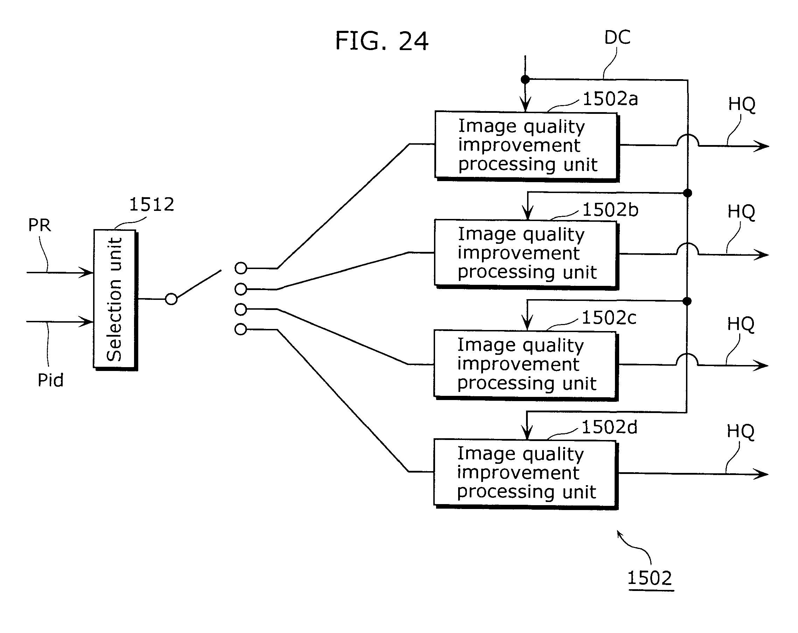

FIG. 24 is a block diagram showing one example of the structure of the optimal image quality improvement processing unit of the present modification.

This optimal image quality improvement processing unit 1502 includes image quality improvement processing units 1502a, 1502b, 1502c and 1502d, and a selection unit 1512.

The selection unit 1512 obtains, from the image coding device, an image quality improvement parameter PR and an identifier Pid indicating the method for generating the image quality improvement parameter PR. In the case where the identifier Pid indicates the generation method based on discrete cosine transform, the selection unit 1512 outputs the image quality improvement parameter PR to the image quality improvement processing unit 1502a, while in the case where the identifier Pid indicates the generation method based on discrete wavelet transform, it outputs the image quality improvement parameter PR to the image quality improvement processing unit 1502b. Or, in the case where the identifier Pid indicates the generation method based on a Laplacian image, the selection unit 1512 outputs the image quality improvement parameter PR to the image quality improvement processing unit 1502c, while in the case where the identifier Pid indicates the generation method based on a point spread function, it outputs the image quality improvement parameter PR to the image quality improvement processing unit 1502d.

When obtaining the image quality improvement parameter PR from the selection unit 1512, each of the image quality improvement processing units 1502a, 1502b, 1502c and 1502d generates, based on its own processing procedure, a high quality decoded image HQ from the image quality improvement parameter PR and the decoded image DC and outputs it, as described above.

Accordingly, in the present modification, by whichever generation method an image quality improvement parameter PR is generated, it is possible to generate a high quality decoded image HQ using the image quality improvement parameter.

Note that in the first through fourth modifications, a parameter generated using discrete cosine transform coefficients, discrete wavelet transform coefficients, a Laplacian image or a point spread function is considered as an image quality improvement parameter PR, but a parameter generated using other frequency transform methods such as Fourier transform and Hadamard transform, other image processing methods such as an edge image generation method using a Sobel operator and an edge image generation method using a Gabor function may be considered as an image quality improvement parameter PR.

### (Fourth Embodiment)

In the present embodiment, an image decoding method for generating a high quality decoded image HQ using a bit stream and an image quality improvement parameter PR' generated by an image coding device which uses the image coding method of the present invention described in the second embodiment and its modification is described.

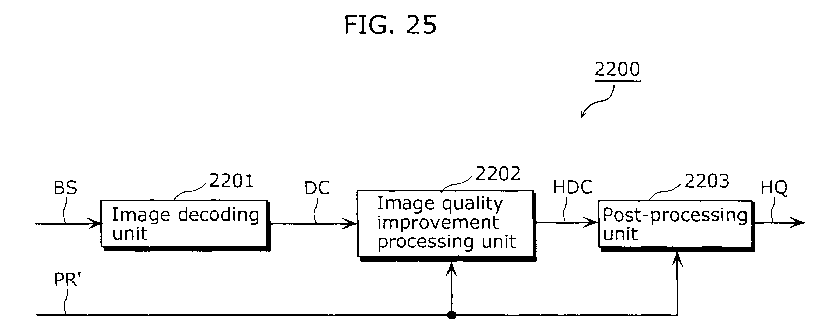

FIG. 25 is a block diagram of an image decoding device 2200 using the image decoding method in the present embodiment. As shown in FIG. 25, the image decoding device 2200 includes an image decoding unit 2201, an image quality improvement processing unit 2202 and a post-processing unit 2203. The bit stream BS and the image quality improvement parameter PR' generated by the image coding device which uses the image coding method of the present invention described in the second embodiment are inputted to the image decoding device 2200. Here, the image quality improvement parameter PR' is a parameter obtained by the method described with reference to FIG. 14 in the second embodiment.

The bit stream BS is inputted to the image decoding unit 2201. The image decoding unit 2201 performs image decoding defined by the standard. For example, the image decoding unit 2201 decodes the bit stream BS in the JPEG format if it has been coded in the JPEG format, decodes the bit stream BS in the MPEG format if it has been coded in the MPEG format, and decodes the bit stream BS in the H.26x format if it has been coded in the H.26x format. The image decoding unit 2201 outputs a decoded image DC that is the result of the image decoding processing, to the image quality improvement processing unit 2202.

Note that in the case where the image quality improvement parameter PR' is included in the header area or the user data area of the bit stream BS, the image decoding unit 2201 separates the image quality improvement parameter PR' from the obtained bit stream BS. Then, the image decoding unit 2201 outputs the separated image quality improvement parameter PR' to the image quality improvement processing unit 2202 and the post-processing unit 2203.

The decoded image DC and the image quality improvement parameter PR' are inputted to the image quality improvement processing unit 2202. The image quality improvement processing unit 2202 performs, on the decoded image DC, the same processing as that performed by the image quality improvement processing unit 1502a in the third embodiment, using the image quality improvement parameter PR'. By performing this processing, the image quality improvement processing unit 2202 generates and outputs a high quality decoded image HDC.

The post-processing unit 2203 performs post-processing on the high quality decoded image HDC using a pre-processing parameter PP included in the image quality improvement parameter PR'. The post-processing unit 2203 performs the same processing as that performed by the inverse pre-processing unit 1201 in the modification of the second embodiment. To be more specific, the post-processing unit 2203 performs, on the high quality decoded image HDC, the processing inverse to the processing performed by the pre-processing unit 1003 in the image coding device of the present invention, using the pre-processing parameter PP. The post-processing unit 2203 can know about the details of the processing performed by the pre-processing unit 1003, from the pre-processing parameter PP. For example, the post-processing unit 2203 performs enlargement processing in the case where the pre-processing unit 1003 has performed image size reduction processing. The post-processing unit 2203 performs inverse filtering by a low-pass filter in the case where the pre-processing unit 1003 has performed filtering by a low-pass filter. The post-processing unit 2203 performs frame rate increase processing in the case where the pre-processing unit 1003 has performed frame rate reduction processing by thinning out frames in the time domain. The post-processing unit 2203 outputs, as a high quality decoded image HQ, the high quality decoded image HDC processed in this manner.

As described above, according to the image decoding method in the present embodiment, after performing, on an input image, pre-processing such as reduction of the image size, filtering by a low-pass filter and reduction of the frame rate by thinning out frames in the time domain, a bit stream BS generated by the coding using the image coding method defined by the standard (such as the JPEG standard and MPEG standard), and an image quality improvement parameter PR' for generating image quality improvement components are obtained. Then, a decoded image DC is generated by decoding the bit stream BS by the image decoding method defined by the standard, and a high quality decoded image HQ is generated by performing post-processing corresponding to the pre-processing and image quality improvement processing on the decoded image DC using the image quality improvement parameter PR'.

Therefore, by the use of the image decoding method of the present embodiment, it is possible to generate not only a decoded image DC by decoding the bit stream BS using the image decoding method defined by the standard (such as the JPEG or MPEG standard), but also to improve the quality of the decoded image DC using the image quality improvement parameter PR'. Since this image quality improvement parameter PR' is a parameter generated based not on the image data but on the frequency components of an input image (original image) and a local decoded image, it is possible to significantly reduce an amount of data and thus to improve the quality of the decoded image with a small increase in information amount. It is also possible to reduce the amount of bits itself of the bit stream BS because the amount of data of the input image has been reduced in the pre-processing for coding it on the part of the image coding device. In other words, by the use of the image decoding method of the present embodiment, it is possible to significantly enhance the image quality with only a small increase in the amount of bits, compared with other image decoding methods defined by the standards. According to the method of the present embodiment having a so-called scalable decoding function, it is also possible to significantly reduce an amount of bits, compared with a conventional image decoding method having such scalable function.

Note that in the present embodiment, the image quality improvement processing unit 2202 performs the same processing as that performed by the image quality improvement processing unit 1502a in the third embodiment, but it may perform the same processing as that performed by the image quality improvement processing units 1502b, 1502c and 1502d in the first to third modifications of the third embodiment, or may perform the same processing as that performed by the optimal image quality improvement processing unit 1502 in the fourth modification of the third embodiment. As described above, in the processing using the image quality improvement parameter PR' in the present embodiment, it is possible to add the high frequency components and the like, which are not included in a decoded image, to the decoded image using discrete cosine transform, discrete wavelet transform, a Laplacian image, a point spread function or the like.

### (Modification)

Here, the modification of the image decoding device in the present embodiment is described.

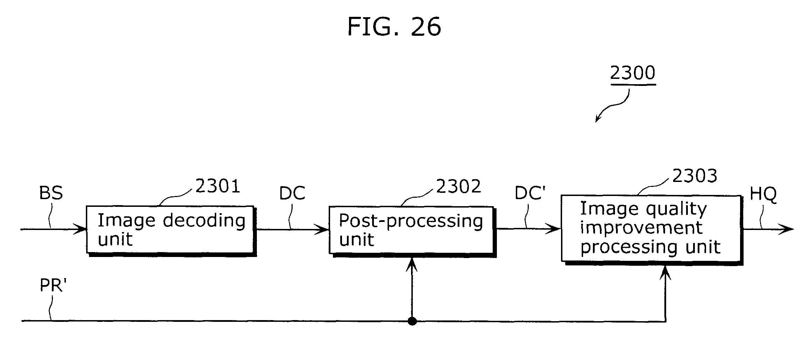

FIG. 26 is a block diagram of an image decoding device 2300 in the present modification. As shown in FIG. 26, the image decoding device 2300 includes an image decoding unit 2301, a post-processing unit 2302 and an image quality improvement processing unit 2303. The bit stream BS and the image quality improvement parameter PR' which have been generated by the image coding device using the image coding method of the present invention described in the second embodiment are inputted to the image decoding device 2300. Here, the image quality improvement parameter PR' is a parameter obtained by the method described with reference to FIG. 15 in the modification of the second embodiment.

The bit stream BS is inputted to the image decoding unit 2301. The image decoding unit 2301 performs the same processing as that performed by the image decoding unit 2201. Then, the image decoding unit 2301 outputs the decoded image DC generated by that processing to the post-processing unit 2302. Note that in the case where the image quality improvement parameter PR' is included in the header area or the user data area of the bit stream BS, the image quality decoding unit 2301 separates the image quality improvement parameter PR' from the obtained bit stream BS. Then, the image decoding unit 2301 outputs the separated image quality improvement parameter PR' to the post-processing unit 2302 and the image quality improvement processing unit 2303.

The post-processing unit 2302 performs post-processing on the decoded image DC using the pre-processing parameter PP among the image quality improvement parameters PR'. The post-processing unit 2302 performs the same processing as that performed by the inverse pre-processing unit 1201 in the modification of the second embodiment. To be more specific, the post-processing unit 2302 performs, on the decoded image DC, the processing inverse to that performed by the pre-processing unit 1003 of the image coding device of the present invention, using the pre-processing parameter PP. The post-processing unit 2302 can know about the details of the processing performed by the pre-processing unit 1003, from the pre-processing parameter PP. For example, the post-processing unit 2302 performs enlargement processing in the case where the pre-processing unit 1003 has performed image size reduction processing. The post-processing unit 2302 performs inverse filtering by a low-pass filter in the case where the pre-processing unit 1003 has performed filtering by a low-pass filter. The post-processing unit 2302 performs frame rate increase processing in the case where the pre-processing unit 1003 has performed frame rate reduction processing by thinning out frames in the time domain. The post-processing unit 2302 outputs the post-processed decoded image DC' that is the result of the processing performed in this manner, to the image quality improvement processing unit 2303.

The post-processed decoded image DC' and the image quality improvement parameter PR' are inputted to the image quality improvement processing unit 2303. The image quality improvement processing unit 2303 performs, on the post-processed decoded image DC', the same processing as that performed by the image quality improvement processing unit 1502a described in the third embodiment, using the image quality improvement parameter PR', and outputs the processing result as a high quality decoded image HQ.

Note that in the present modification, the image quality improvement processing unit 2303 performs the same processing as that performed by the image quality improvement processing unit 1502a in the third embodiment, but it may perform the same processing as that performed by the image quality improvement processing units 1502b, 1502c and 1502d in the first to third modifications of the third embodiment, or may perform the same processing as that performed by the optimal image quality improvement processing unit 1502 in the fourth modification of the third embodiment.

### (Fifth Embodiment)

By recording a program for implementing the image coding method and the image decoding method as shown in the above-mentioned embodiments and modifications, on a recording medium such as a flexible disk, it becomes possible to perform the processing as shown in the above embodiments and modifications easily in an independent computer system.

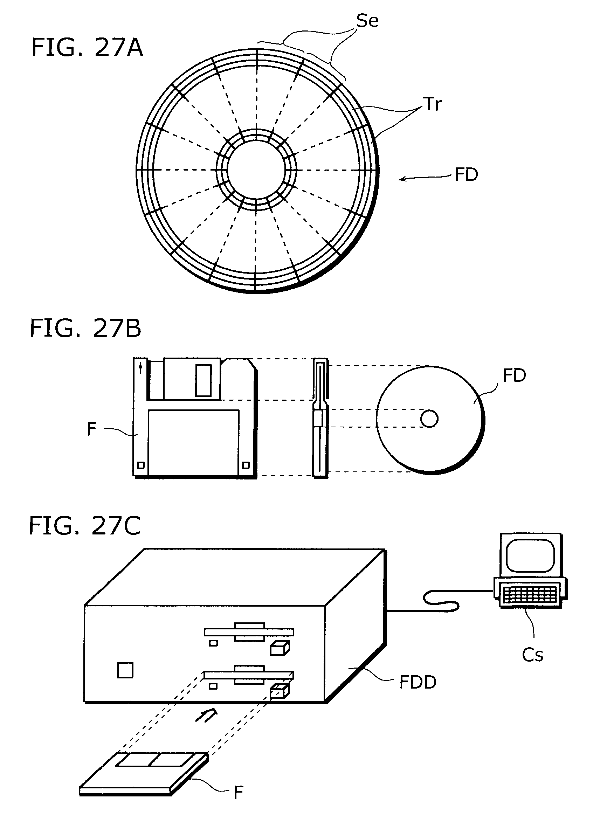

FIG. 27A, FIG. 27B and FIG. 27C are diagrams for explaining the case where the image coding method and the image decoding method in the above embodiments and modifications are executed in a computer system using a program recorded on a recording medium such as a flexible disk.

FIG. 27B shows the front view and the schematic cross-section of a flexible disk, as well as the flexible disk itself, whereas FIG. 27A shows an example of a physical format of the flexible disk as a recording medium body. A flexible disk FD is contained in a case F, a plurality of tracks Tr are formed concentrically on the surface of the disk in the radius direction from the periphery, and each track is divided into 16 sectors Se in the angular direction. Therefore, as for the flexible disk storing the above program, the program is recorded in an area allocated for it on the flexible disk FD

In addition, FIG. 27C shows the configuration for recording and reproducing the program on and from the flexible disk FD. When the program for implementing the image coding method and the image decoding method is recorded on the flexible disk FD, the computer system Cs writes the program onto the flexible disk FD via a flexible disk drive FDD. In order to construct, in the computer system, the above image coding method and image decoding method which are implemented by the program recorded on the flexible disk, the program is read out from the flexible disk via the flexible disk drive FDD and transferred to the computer system Cs.

Note that the above description is made on the assumption that a recording medium is a flexible disk, but the same processing can also be performed using an optical disk. In addition, the recording medium is not limited to these, but any other mediums such as an IC card and a ROM cassette can be used in the same manner if only a program can be recorded on them.

### (Sixth Embodiment)

Furthermore, the applications of the image coding method and the image decoding method illustrated in the above embodiments and modifications, and a system using such applications are described here.

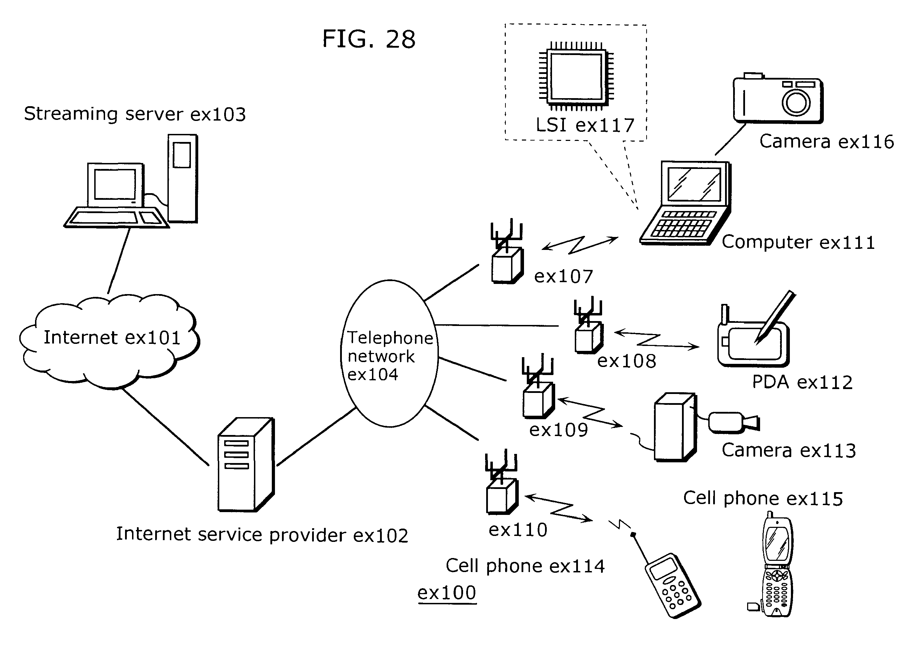

FIG. 28 is a block diagram showing the overall configuration of a content supply system ex100 for realizing content distribution service. The area for providing communication service is divided into cells of desired size, and base stations ex107 to ex110 which are fixed wireless stations are placed in respective cells.

In this content supply system ex100, various devices such as a computer ex111, a personal digital assistant (PDA) ex112, a camera ex113, a cell phone ex114 and a camera-equipped cell phone ex115 are connected to the Internet ex101, via an Internet service provider ex102, a telephone network ex104 and base stations ex107 to ex110, for example.

However, the content supply system ex100 is not limited to the combination as shown in FIG. 28, and may include a combination of any of these devices which are connected to each other. Also, each device may be connected directly to the telephone network ex104, not through the base stations ex107 to ex110 which are the fixed wireless stations.

The camera ex113 is a device such as a digital video camera capable of shooting moving images. The cell phone may be any of a cell phone of a Personal Digital Communications (PDC) system, a Code Division Multiple Access (CDMA) system, a Wideband-Code Division Multiple Access (W-CDMA) system and a Global System for Mobile Communications (GSM) system, a Personal Handy-phone System (PHS), and the like.

Also, a streaming server ex103 is connected to the camera ex113 via the base station ex109 and the telephone network ex104, which realizes live distribution or the like using the camera ex113 based on the coded data transmitted from the user. The coding of the data shot by the camera may be performed by the camera ex113, the server for transmitting the data, or the like. Also, the moving image data shot by a camera ex116 may be transmitted to the streaming server ex103 via the computer ex111. The camera ex116 is a device such as a digital camera capable of shooting still and moving images. In this case, either the computer ex111 or the camera ex116 may code the moving image data. An LSI ex117 included in the computer ex111 or the camera ex116 performs the coding processing. Note that software for coding and decoding images may be integrated into any type of a recording medium (such as a CD-ROM, a flexible disk and a hard disk) that is readable by the computer ex111 or the like. Furthermore, the camera-equipped cell phone ex115 may transmit the moving image data. This moving image data is the data coded by the LSI included in the cell phone ex115.

In this content supply system ex100, contents (such as a video of a live music performance) shot by users using the camera ex113, the camera ex116 or the like are coded in the same manner as in the above embodiments and modifications and transmitted to the streaming server ex103, while the streaming server ex103 makes stream distribution of the above content data to the clients at their requests. The clients include the computer ex111, the PDA ex112, the camera ex113, the cell phone ex114, and the like, capable of decoding the above-mentioned coded data. The content supply system ex100 is a system in which the clients can thus receive and reproduce the coded data, and further can receive, decode and reproduce the data in real time so as to realize personal broadcasting.

When each device included in this system performs coding or decoding, the image coding method or the image decoding method shown in the above embodiments and modifications may be used.

A cell phone is now described as an example thereof.

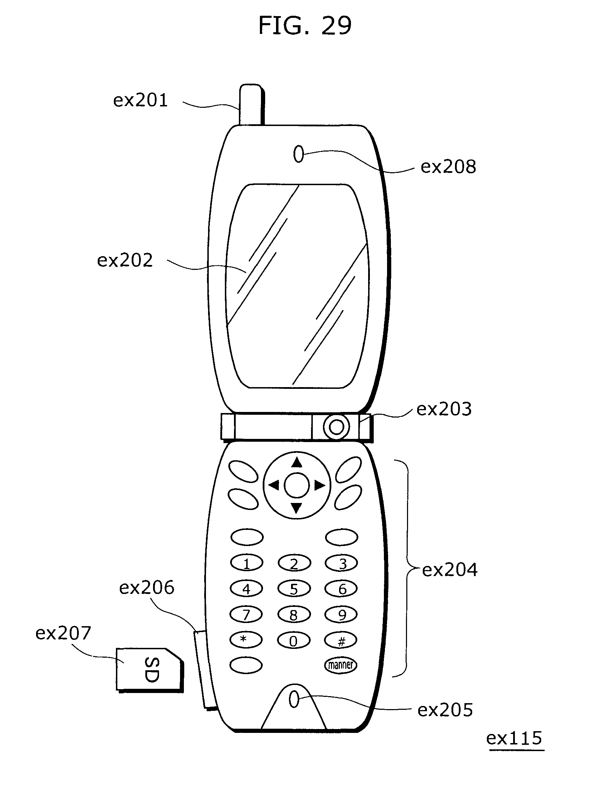

FIG. 29 is a diagram showing a cell phone ex115 which uses the image coding method and the image decoding method as described in the above embodiments and modifications. The cell phone ex115 has: an antenna ex201 for communicating radio waves with the base station ex110; a camera unit ex203 such as a CCD camera capable of shooting moving and still images; a display unit ex202 such as a liquid crystal display for displaying the data obtained by decoding video shot by the camera unit ex203, video received by the antenna ex201, or the like; a main body including a set of operation keys ex204; a voice output unit ex208 such as a speaker for outputting voices; a voice input unit ex205 such as a microphone for inputting voices; a recording medium ex207 for storing coded or decoded data, such as data of moving or still images shot by the camera, and data of text, moving images or still images of received e-mails; and a slot unit ex206 for attaching the recording medium ex207 into the cell phone ex115. The recording medium ex207 includes a flash memory element, a kind of Electrically Erasable and Programmable Read Only Memory (EEPROM) that is an electrically rewritable and erasable nonvolatile memory, in a plastic case such as an SD card.

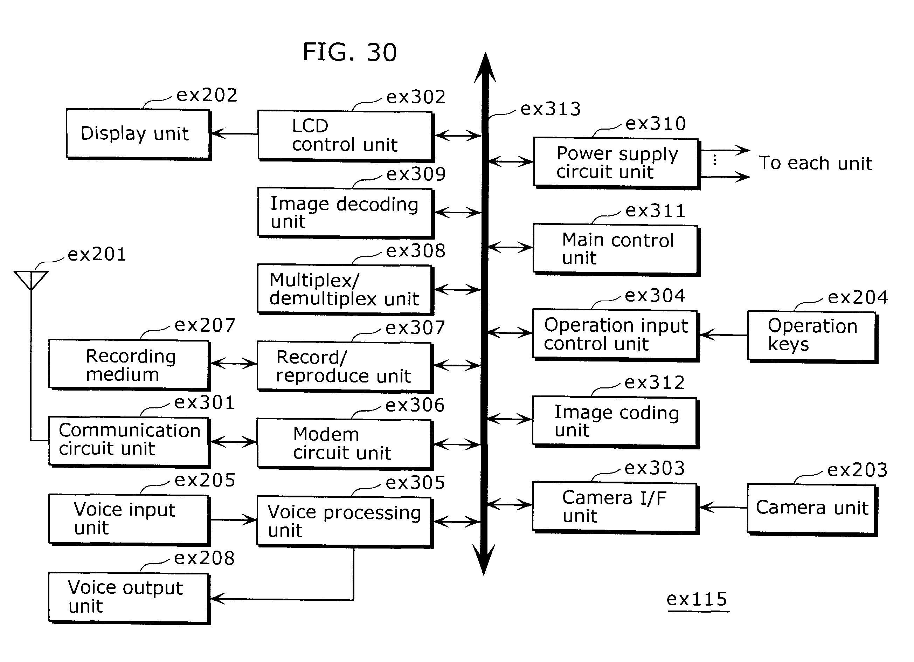

Furthermore, the cell phone ex115 is described with reference to FIG. 30. In the cell phone ex115, a power supply circuit unit ex310, an operation input control unit ex304, an image coding unit ex312, a camera interface unit ex303, an Liquid Crystal Display (LCD) control unit ex302, an image decoding unit ex309, a multiplex/demultiplex unit ex308, a record/reproduce unit ex307, a modem circuit unit ex306 and a voice processing unit ex305, are connected to a main control unit ex311, and to each other, via a synchronous bus ex313. The main control unit ex311 is for the overall controlling of each unit of the main body including the display unit ex202 and the operation keys ex204.

When a call-end key or a power key is turned ON by a user's operation, the power supply circuit unit ex310 supplies the respective units with power from a battery pack so as to activate the camera-equipped digital cell phone ex115 to a ready state.

In the cell phone ex115, under the control of the main control unit ex311 including a CPU, ROM, RAM and the like, the voice processing unit ex305 converts the voice signals received by the voice input unit ex205 in voice conversation mode into digital voice data, the modem circuit unit ex306 performs spread spectrum processing of the digital voice data, and the communication circuit unit ex301 performs digital-to-analog conversion and frequency transformation of the data, so as to transmit the resulting data via the antenna ex201. Also, in the cell phone ex115, the data received by the antenna ex201 in voice conversation mode is amplified and subjected to the frequency transformation and analog-to-digital conversion, the modem circuit unit ex306 performs inverse spread spectrum processing of the data, and the voice processing unit ex305 converts it into analog voice data, so as to output the resulting data via the voice output unit ex208.

Furthermore, when transmitting an e-mail in data communication mode, the text data of the e-mail inputted by operating the operation keys ex204 of the main body is sent out to the main control unit ex311 via the operation input control unit ex304. After the modem circuit unit ex306 performs spread spectrum processing of the text data and the communication circuit unit ex301 performs a digital-to-analog conversion and frequency transformation on the text data, the main control unit ex311 transmits the data to the base station ex110 via the antenna ex201.

When transmitting image data in data communication mode, the image data shot by the camera unit ex203 is provided to the image coding unit ex312 via the camera interface unit ex303. When the image data is not transmitted, the image data shot by the camera unit ex203 can also be displayed directly on the display unit 202 via the camera interface unit ex303 and the LCD control unit ex302.

The image coding unit ex312, including the image coding device described in the present invention, compresses and codes the image data provided from the camera unit ex203 by the image coding method used for the image coding device as shown in the above-mentioned embodiments and modifications so as to convert it into coded image data, and sends it out to the multiplex/demultipfex unit ex308. At this time, the cell phone ex115 sends out the voices received by the voice input unit ex205 during the shooting by the camera unit ex203, as digital voice data, to the multiplex/demultiplex unit ex308 via the voice processing unit ex305.

The multiplex/demultiplex unit ex308 multiplexes the coded image data provided from the image coding unit ex312 and the voice data provided from the voice processing unit ex305 using a predetermined method, and the modem circuit unit ex306 then performs spread spectrum processing of the multiplexed data obtained as the result of the processing, and the communication circuit unit ex301 performs digital-to-analog conversion and frequency transformation on the resulting data and transmits it via the antenna ex201.

As for receiving data of a moving image file which is linked to a website or the like in data communication mode, the modem circuit unit ex306 performs inverse spread spectrum processing of the data received from the base station ex110 via the antenna ex201, and sends out the multiplexed data obtained as the result of the processing to the multiplex/demultiplex unit ex308.

In order to decode the multiplexed data received via the antenna ex201, the multiplex/demultiplex unit ex308 demultiplexes the multiplexed data into a coded bit stream of image data and a coded bit stream of voice data, and provides the coded image data to the image decoding unit ex309 and the voice data to the voice processing unit ex305, respectively, via the synchronous bus ex313.

Next, the image decoding unit ex309, including the image decoding device described in the present invention, decodes the coded bit stream of the image data using the decoding method corresponding to the coding method as shown in the above-mentioned embodiments and modifications, so as to generate reproduced moving image data, and provides this data to the display unit ex202 via the LCD control unit ex302, and thus moving image data included in a moving image file linked to a website, for instance, is displayed. At the same time, the voice processing unit ex305 converts the voice data into analog voice data, and provides this data to the voice output unit ex208, and thus voice data included in a moving image file linked to a website, for instance, is reproduced.

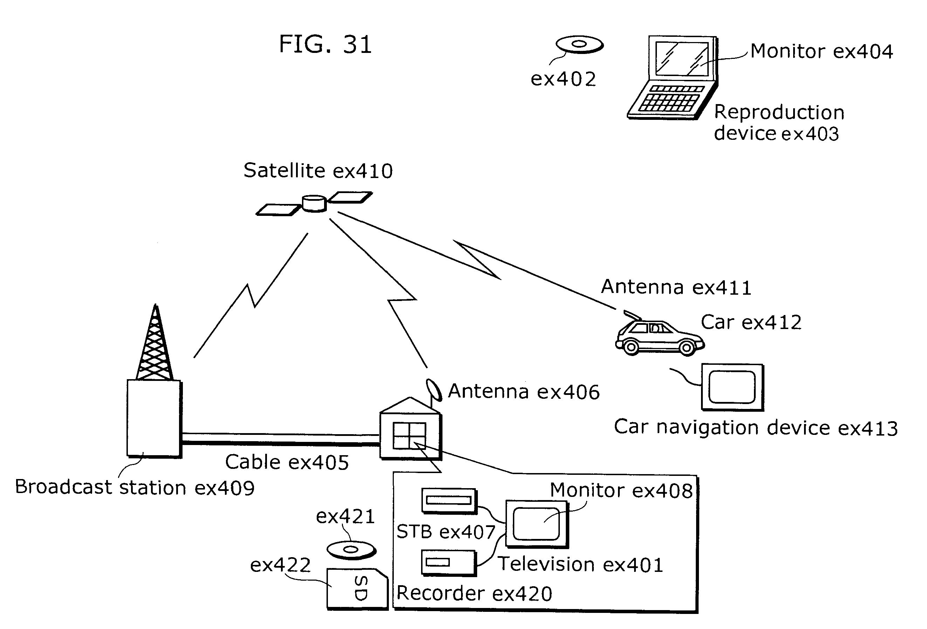

The present invention is not limited to the above-mentioned system since satellite or terrestrial digital broadcasting has been in the news lately, and at least either the image coding device or the image decoding device in the above-mentioned embodiments and modifications can be incorporated into the digital broadcasting system as shown in FIG. 31. More specifically, a coded bit stream of video information is transmitted from a broadcast station ex409 to a communication or broadcast satellite ex410 via radio waves. Upon receipt of it, the broadcast satellite ex410 transmits radio waves for broadcasting, a home antenna ex406 with a satellite broadcast reception function receives the radio waves, and a device such as a television (receiver) ex401 or a Set Top Box (STB) ex407 decodes the coded bit stream for reproduction. The image decoding device as shown in the above-mentioned embodiments and modifications can be implemented in a reproduction device ex403 for reading and decoding a coded bit stream recorded on a storage medium ex402 such as a CD and DVD that is a recording medium. In this case, the reproduced video signals are displayed on a monitor ex404. It is also conceived to implement the image decoding device in the set top box ex407 connected to a cable ex405 for cable television or the antenna ex406 for satellite and/or terrestrial broadcasting so as to reproduce them on a monitor ex408 of the television. The image decoding device may be incorporated into the television, not in the set top box. Also, a car ex412 having an antenna ex411 can receive signals from the satellite ex410, the base station ex107 or the like, and reproduce moving images on a display device such as a car navigation system ex413 or the like in the car ex412.

Furthermore, the image coding device as shown in the above-mentioned embodiments and modifications can code image signals and record them on a recording medium. As a concrete example, there is a recorder ex420 such as a DVD recorder for recording image signals on a DVD disk ex421 and a disk recorder for recording them on a hard disk. They can also be recorded on an SD card ex422. If the recorder ex420 includes the image decoding device as shown in the above-mentioned embodiments and modifications, the image signals recorded on the DVD disk ex421 or the SD card ex422 can be reproduced for display on the monitor ex408.

As for the configuration of the car navigation system ex413, a configuration without the camera unit ex203, the camera interface unit ex303 and the image coding unit ex312, out of the units as shown in FIG. 30, is conceivable. The same applies to the computer ex111, the television (receiver) ex401 and others.

Moreover, three types of implementations can be conceived for a terminal such as the above-mentioned cell phone ex114: a communication terminal equipped with both an encoder and a decoder; a sending terminal equipped with an encoder only; and a receiving terminal equipped with a decoder only.

As described above, it is possible to use the image coding method and the image decoding method described in the above embodiments and modifications in any of above-mentioned devices and systems, and thus the effects described in the above embodiments can be obtained.

Note that the present invention is not limited to the above mentioned embodiments and modifications, and various modifications and corrections can be made within the scope of the present invention.

Furthermore, each functional block shown in the block diagrams (such as FIG. 1, FIG. 13, FIG. 16, FIG. 25 and FIG. 26) is typically embodied as an LSI which is an integrated circuit. These LSIs may be constructed as a single chip individually, or a part or all of these LSIs may be constructed as a single chip (for example, functional blocks other than the memory may be constructed in a single chip).
Here, it is called an LSI. However, it can be called an IC, a system LSI, a super LSI, or an ultra LSI depending on its integration density.

In addition, a form of an integrated circuit is not limited to such LSI, and it may be embodied as a private circuit or as a general processor. After the LSI is manufactured, a Field Programmable Gate Array (FPGA) capable of programming, and a reconfigurable processor capable of reconfiguring connection and setting of circuit cells in the LSI may be used.

Furthermore, there is no doubt that, if another technology of constructing an integrated circuit is introduced as an alternative to LSI by the advances in semiconductor technology or technology derived therefrom, the functional blocks may be integrated using such new technology. Biotechnology may be applied.

Only the unit for storing data to be coded or decoded, out of respective functional blocks, can be constructed as a separate unit, without being incorporated into a single chip.

### Industrial Applicability

The image coding method and the image decoding method according to the present invention have an effect of improving the quality of a decoded image while significantly reducing the amount of bits, and can be applied to, for example, a devices for coding and decoding an image, a digital video camera including such devices, a cellular phone, a PDA, and the like.

## Claims

1. An image coding method of coding an input image, said method comprising:
a coding step of coding an input image and generating a bit stream including the coded input image;
a decoded image generation step of generating a decoded image by decoding the coded input image; and
a parameter generation step of generating a parameter for making the decoded image more closely resemble the input image, based on a frequency component of at least one of the input image and the decoded image.

2. The image coding method according to Claim 1,
wherein in said parameter generation step, the parameter is generated by performing frequency transform on the decoded image and the input image and deriving a difference between frequency transform coefficients of the decoded image and the input image which are obtained by the frequency transform.

3. The image coding method according to Claim 2,
wherein in said parameter generation step, the parameter is generated using discrete cosine transform as the frequency transform.

4. The image coding method according to Claim 2,
wherein in said parameter generation step, the parameter is generated using discrete wavelet transform as the frequency transform.

5. The image coding method according to Claim 2,
wherein in said parameter generation step, the parameter is generated per image area by deriving a difference between frequency transform coefficients of the decoded image and the input image on a per image area basis.

6. The image coding method according to Claim 1,
wherein in said parameter generation step, the parameter is generated by extracting an edge component of the decoded image and an edge component of the input image and deriving a difference between the edge components.

7. The image coding method according to Claim 6,
wherein in said parameter generation step, the parameter is generated by generating, as the edge components, a Laplacian image of the decoded image and a Laplacian image of the input image and deriving a difference between the Laplacian images.

8. The image coding method according to Claim 6,
wherein in said parameter generation step, the parameter is generated per image area by deriving a difference between edge components of the decoded image and the input image on a per image area basis.

9. The image coding method according to Claim 1,
wherein in said parameter generation step, the parameter is generated by performing frequency-based filtering on one of the decoded image and the input image and comparing the filtered one of the images with the other.

10. The image coding method according to Claim 9,
wherein in said parameter generation step, filtering is performed using a point spread function, as the filtering.

11. The image coding method according to Claim 9,
wherein in said parameter generation step, the parameter is generated per image area by comparing the filtered one of the decoded image and the input image with the other on a per image area basis.

12. The image coding method according to Claim 1, further comprising
an identification information generation step of generating identification information for identifying processing used for generating the parameter in said parameter generation step.

13. The image coding method according to Claim 1, further comprising
a multiplexing step of multiplexing the parameter generated in said parameter generation step, into the bit stream generated in said coding step.

14. The image coding method according to Claim 1, further comprising
a pre-processing step of performing predetermined pre-processing on the input image,
wherein in said coding step, an input image on which the pre-processing has been performed is coded and a bit stream is generated, and
in said parameter generation step, the parameter is generated based on a frequency component of at least one of: the decoded image; and the input image on which the pre-processing has been performed or the input image on which the pre-processing has not been performed.

15. The image coding method according to Claim 14,
wherein in said pre-processing step, one of: image size reduction processing; low-pass filtering; and frame rate reduction processing is performed on the input image.

16. The image coding method according to Claim 14, further comprising
a pre-processing parameter generation step of generating a pre-processing parameter indicating details of the pre-processing performed in said pre-processing step.

17. An image decoding method of decoding a coded input image, said method comprising:
a bit stream obtainment step of obtaining a bit stream;
a decoding step of generating a decoded image by decoding the coded input image included in the bit stream;
a parameter obtainment step of obtaining a parameter generated based on a frequency component of at least one of the coded input image and the decoded image; and
an image quality improvement step of generating a high quality decoded image that more closely resembles an input image than the decoded image, by applying the parameter to the decoded image.

18. The image decoding method according to Claim 17,
wherein said image quality improvement step includes:
a frequency transform step of generating a first frequency transform coefficient by performing frequency transform on the decoded image;
a coefficient correction step of generating a second frequency transform coefficient by correcting the first frequency transform coefficient using the parameter; and
an inverse frequency transform step of generating the high quality decoded image by performing inverse frequency transform on the second frequency transform coefficient.

19. The image decoding method according to Claim 18,
wherein in said frequency transform step, the first frequency transform coefficient is generated using discrete cosine transform as the frequency transform, and
in said inverse frequency transform step, the high quality decoded image is generated using inverse discrete cosine transform as the inverse frequency transform.

20. The image decoding method according to Claim 18,
wherein in said frequency transform step, the first frequency transform coefficient is generated using discrete wavelet transform as the frequency transform, and
in said inverse frequency transform step, the high quality decoded image is generated using inverse discrete wavelet transform as the inverse frequency transform.

21. The image decoding method according to Claim 17,
wherein said image quality improvement step includes:
an edge extraction step of extracting a first edge component from the decoded image;
an edge component correction step of generating a second edge component by correcting the first edge component using the parameter; and
an edge application step of generating the high quality decoded image by applying the second edge component to the decoded image.

22. The image decoding method according to Claim 21,
wherein in said edge extraction step, the first edge component is extracted by generating a Laplacian image from the decoded image.

23. The image decoding method according to Claim 17,
wherein in said image quality improvement step, the high quality decoded image is generated by performing, on the decoded image, frequency-based filtering suited for the parameter.

24. The image decoding method according to Claim 23,
wherein in said image quality improvement step, the high quality decoded image is generated by performing filtering using a point spread function, as the filtering.

25. The image decoding method according to Claim 17, further comprising
an identification information obtainment step of obtaining identification information for identifying processing used for generating the parameter,
wherein in said image quality improvement step, the high quality decoded image is generated by applying the parameter to the decoded image according to the processing indicated by the identification information.

26. The image decoding method according to Claim 17,
wherein in said parameter obtainment step, the parameter is obtained by separating the parameter from multiplexed information in which the bit stream and the parameter are multiplexed.

27. The image decoding method according to Claim 17, further comprising
a post-processing step of performing predetermined post-processing on the decoded image or the high quality decoded image,
wherein in said image quality improvement step, in the case where the post-processing has been performed on the decoded image in said post-processing step, the high quality decoded image is generated by applying the parameter to the decoded image on which the post-processing has been performed.

28. The image decoding method according to Claim 27,
wherein in said post-processing step, one of: image size enlargement processing; high-pass filtering; and frame rate increase processing is performed on the decoded image or the high quality decoded image.

29. The image decoding method according to Claim 27, further comprising
a post-processing parameter obtainment step of obtaining a post-processing parameter indicating details of the post-processing,
wherein in said post-processing step, the post-processing of the details indicated by the post-processing parameter is performed.

30. An image coding device which codes an input image, said device comprising:
a coding unit operable to code an input image and to generate a bit stream including the coded input image;
a decoded image generation unit operable to generate a decoded image by decoding the coded input image; and
a parameter generation unit operable to generate a parameter for making the decoded image more closely resemble the input image, based on a frequency component of at least one of the input image and the decoded image.

31. An image decoding device which decodes a coded input image, said device comprising:
a bit stream obtainment unit operable to obtain a bit stream;
a decoding unit operable to generate a decoded image by decoding the coded input image included in the bit stream;
a parameter obtainment unit operable to obtain a parameter generated based on a frequency component of at least one of the coded input image and the decoded image; and
an image quality improvement unit operable to generate a high quality decoded image that more closely resembles an input image than the decoded image, by applying the parameter to the decoded image.

32. An integrated circuit which codes an input image, said circuit comprising:
a coding unit operable to code an input image and to generate a bit stream including the coded input image;
a decoded image generation unit operable to generate a decoded image by decoding the coded input image; and
a parameter generation unit operable to generate a parameter for making the decoded image more closely resemble the input image, based on a frequency component of at least one of the input image and the decoded image.

33. An integrated circuit which decodes a coded input image, said circuit comprising:
a bit stream obtainment unit operable to obtain a bit stream;
a decoding unit operable to generate a decoded image by decoding the coded input image included in the bit stream;
a parameter obtainment unit operable to obtain a parameter generated based on a frequency component of at least one of the coded input image and the decoded image; and
an image quality improvement unit operable to generate a high quality decoded image that more closely resembles an input image than the decoded image, by applying the parameter to the decoded image.

34. A program for coding an input image, said program causing a computer to execute:
a coding step of coding an input image and generating a bit stream including the coded input image;
a decoded image generation step of generating a decoded image by decoding the coded input image; and
a parameter generation step of generating a parameter for making the decoded image more closely resemble the input image, based on a frequency component of at least one of the input image and the decoded image.

35. A program for decoding a coded input image, said program causing a computer to execute:
a bit stream obtainment step of obtaining a bit stream;
a decoding step of generating a decoded image by decoding the coded input image included in the bit stream;
a parameter obtainment step of obtaining a parameter generated based on a frequency component of at least one of the coded input image and the decoded image; and
an image quality improvement step of generating a high quality decoded image that more closely resembles an input image than the decoded image, by applying the parameter to the decoded image.
